# EUROPEAN PATENT APPLICATION

(11) **EP 4 730 553 A1**
(43) Date of publication of application: **22.04.2026**
(21) Application number: 24823620.0
(22) Date of filing: 04.06.2024
(51) Int. Cl.: H01Q 1/12, H02K 7/116

(54) **CLAMPING APPARATUS FOR ELECTRONIC DEVICE, AND ANTENNA APPARATUS AND LIGHTING APPARATUS INCLUDING SAME**

(30) Priority: 13.06.2023 KR 20230075253; 03.06.2024 KR 20240072518
(71) Applicant: KMW Inc., Hwaseong-si, Gyeonggi-do 18462 (KR)
(72) Inventor: PARK, Dae Myung, Hwaseong-si Gyeonggi-do 18443 (KR); KIM, Hee, Osan-si Gyeonggi-do 18131 (KR); CHOI, In Hwa, Yongin-si Gyeonggi-do 17148 (KR)
(74) Representative: impuls legal PartG mbB
(86) International application number: PCT/KR2024/007600
(87) International publication number: WO 2024/258100

(57) **Abstract**

The present disclosure relates to a clamping apparatus for an electronic device, and an antenna apparatus and a lighting apparatus each including the same. The clamping apparatus for an electronic device includes a guide housing configured to form and provide a predetermined installation space, a steering unit including a steering housing provided to be capable of left-right steering rotation with respect to the guide housing, and a tilting unit provided to be capable of back-and-forth tilting rotation with respect to the steering unit, including a tilting bracket part for installing an electronic device, and configured to internally form and provide a predetermined installation space. A steering drive part that drives the steering unit is disposed hidden in an installation space within the guide housing, and a tilting drive part that drives the tilting unit is disposed hidden in an installation space within the steering housing.

## Description

### [Technical Field]

The present disclosure relates to a clamping apparatus for an electronic device, and an antenna apparatus and a lighting apparatus each including the same, and more particularly, to a clamping apparatus for an electronic device that allows a worker to efficiently dispose an electronic device in a dense installation space and to easily adjust the direction of the electronic device, that can minimize interference during direction adjustment due to the size of the electronic device, and that can be very simply mounted on a support pole, and an antenna apparatus and a lighting apparatus each including the same.

### [Background Art]

In general, a wireless communication technology, for example, a multiple input multiple output (MIMO) technology, is a technology of significantly increasing a data transmission capacity by using a plurality of antennas, and is a spatial multiplexing technique in which a transmitter transmits different type of data through each transmit antenna and a receiver distinguishes received data through appropriate signal processing.

In a massive MIMO technology, as the number of antennas (ANTs) increases, the number of transmitters and the number of filters increase together. In particular, when an MIMO antenna in which modules implemented with RF elements and digital elements are combined in a stacked structure is installed in a limited space, there is an increasing need for compactification and miniaturization design for a plurality of layers constituting the MIMO antenna in order to maximize ease of installation or space utilization, and there is a strong need for free direction adjustment of an antenna apparatus installed on one support pole.

In response to the above needs, Korean Patent No. 10-2095871 (registered on April 2, 2020) (hereinafter, referred to as "related art") discloses "Clamping Apparatus for Antenna" including a tilting unit for rotating an antenna apparatus in an up and down direction and a steering unit for rotating the antenna apparatus in a left and right direction.

However, the related art has a problem in that a range in which the tilting unit rotates the antenna apparatus in the up and down direction is narrow. When the tilting rotation range is narrow, there is a problem in that an area directly below a building, where the antenna apparatus is installed, is not covered, a support pole needs to be inclinedly installed, or the antenna apparatus needs to be inclinedly installed from the beginning.

In addition, when an antenna apparatus having a heavy weight is installed on a support pole, there is a problem in that it is difficult to ensure the safety of workers on site such as having to go through a very complicated process.

In addition, the clamping apparatus for antenna according to the related art, as can be seen from the name, has, as a core configuration, only a technical configuration related to coupling and fixing to the antenna apparatus because it is specialized for directionality adjustment of the antenna apparatus, but since devices requiring the directionality adjustment include not only the aforedescribed antenna apparatus but also lighting apparatuses, laser oscillation devices, air conditioning devices, and the like, the usability of the clamping apparatus according to the related art specialized for an antenna apparatus is extremely limited.

### [Disclosure]

### [Technical Problem]

The present disclosure is proposed to resolve the aforementioned technical issues and is directed to providing a clamping apparatus for an electronic device that allows an electronic device to be tilted and rotated in an up and down direction while simultaneously allowing left-right steering rotation, thereby maximally ensuring a rotational range in each direction, and an antenna apparatus and a lighting apparatus each including the same.

In addition, the present disclosure is also directed to providing a clamping apparatus for an electronic device that can be installed on a support pole through an operation of first mounting a part of a tilting bracket on a relatively heavy electronic device and then easily coupling the tilting bracket to a steering housing, thereby ensuring the safety of workers on site, and an antenna apparatus and a lighting apparatus each including the same.

Technical issues of the present disclosure are not limited to the technical issues mentioned above, and other technical issues not mentioned above will be clearly understood by those skilled in the art from the following description.

### [Technical Solution]

A clamping apparatus for an electronic device according to an embodiment of the present disclosure includes: a guide housing configured to form and provide a predetermined installation space; a steering unit including a steering housing provided to be capable of left-right steering rotation with respect to the guide housing; and a tilting unit provided to be capable of back-and-forth tilting rotation with respect to the steering unit, including a tilting bracket part for installing an electronic device, and configured to internally form and provide a predetermined installation space, wherein a steering drive part that drives the steering unit is disposed hidden in an installation space within the guide housing, and a tilting drive part that drives the tilting unit is disposed hidden in an installation space within the steering housing.

The clamping apparatus for an electronic device further includes support pole installation bracket parts configured to mediate an installation of the electronic device to a support pole, and the support pole installation bracket part includes: an upper fixing bracket part configured to mediate an installation of the guide housing to the support pole; a steering rotation guide bracket part provided so that the steering housing is disposed between the guide housing and the steering rotation guide bracket part and configured to support the left-right steering rotation of the steering housing; and a lower fixing bracket part configured to mediate an installation of the steering rotation guide bracket part to the support pole.

Each of the upper fixing bracket part and the lower fixing bracket part may include: a bracket body that is tightly coupled to one side surface of the support pole; and a pair of connection bars extending from both ends of the bracket body and extending with the support pole interposed therebetween, wherein front ends of the pair of connection bars of the upper fixing bracket part may be connected to the guide housing, and front ends of the pair of connection bars of the lower fixing bracket part may be connected to the steering rotation guide bracket part.

The steering drive part may include a steering shaft vertically disposed inside the guide housing in an up and down direction, wherein one end of the steering shaft may be coupled to be form-fitted to a shaft connection part integrally provided on an upper surface of the steering housing so as to rotatably interfere in a shaft rotation direction.

The steering drive part may be installed inside the guide housing and may further include: a steering drive motor having an electrically rotatably driven motor shaft; and a reduction gear set connected to the motor shaft of the steering drive motor to receive rotational force and reduce the rotational force at a predetermined gear ratio.

An output worm gear included in the reduction gear set and engaged with the steering shaft to transmit reduced rotational force may be disposed horizontally in the guide housing, and may be disposed to be offset at a predetermined angle with respect to an axial direction of a tilting shaft of the tilting unit.

The clamping apparatus for an electronic device may further include a steer photo sensor part included in the reduction gear set and configured to detect a rotation angle of a pinion gear part included in the steering shaft to be engaged with the output worm gear.

The clamping apparatus for an electronic device may further include a first worm gear included in the reduction gear set and connected to the motor shaft of the steering drive motor, and a rotation shaft of the first worm gear may be horizontally disposed, and the steering drive motor may be disposed inside the guide housing so that the motor shaft is directly connected to the rotation shaft of the first worm gear and a longitudinal direction is horizontal.

A shaft connection part form-fitted to a lower end of a steering shaft exposed to a lower surface of the guide housing to receive rotational force of the steering drive part may be integrally provided on an upper surface of the steering housing, and a steering rotation guide boss, into which a steering guide protrusion protruding upward from the steering rotation guide bracket part is inserted, may be integrally provided on a lower surface of the steering housing.

A power connector may protrude downward from a lower surface of the steering housing to electrically connect the steering housing to the tiling drive part, and an interference avoidance hole may be provided vertically through the steering rotation guide bracket part to prevent interference with the power connector.

The tilting drive part may include a tilting shaft horizontally disposed inside the steering housing in a left and right direction, wherein the tilting shaft may be formed at both left and right ends thereof with shaft form-fitting grooves to which tilting shaft protrusions of the tilting bracket part inserted through left and right sides of the steering housing are form-fitted.

The tilting bracket part may include: a device mounting part having a front surface to which a back surface of the electronic device is coupled; and a pair of tilting mounting parts that extend rearward from a back surface of the device mounting part to overlap left and right sides of the steering housing and with which the tilting shaft protrusions are integrally formed, wherein at least one of the pair of tilting mounting parts may be detachable from the device mounting part so that the tilting shaft protrusions are inserted in the left and right direction into the shaft form-fitting grooves of the tilting shaft fixed inside the steering housing.

The tilting bracket part may include: a device mounting part having a front surface to which a back surface of the electronic device is coupled; and a pair of tilting mounting parts that extend rearward from a back surface of the device mounting part to overlap left and right sides of the steering housing and that are formed integrally with the device mounting part, wherein the pair of tilting mounting parts may be fixed to a tilting shaft connection part including the tilting shaft protrusions inserted into the shaft form-fitting grooves of the tilting shaft.

The tilting drive part may be installed inside the steering housing and may further include: a tilting drive motor having an electrically rotatably driven motor shaft; and a reduction gear set connected to a motor shaft of the tilting drive motor to receive rotational force and reduce the rotational force at a predetermined gear ratio.

The reduction gear set may further include: an output worm gear engaged with a pinion gear part provided in the steering shaft to transmit the reduced rotational force; and a tilt photo sensor part configured to detect a rotation angle of the pinion gear part provided in the steering shaft.

As an antenna apparatus including a clamping apparatus for an electronic device according to an embodiment of the present disclosure, the clamping apparatus for an electronic device includes: a guide housing configured to form and provide a predetermined installation space; a steering unit including a steering housing provided to be capable of left-right steering rotation with respect to the guide housing so that a beam irradiation angle from an irradiation surface of an antenna element is adjusted in a left and right direction; and a tilting unit provided to be capable of back-and-forth tilting rotation with respect to the steering unit so that the beam irradiation angle of the antenna element is adjusted in an up and down direction, including a tilting bracket part for installing an antenna housing body installed with the antenna element, and configured to internally form and provide a predetermined installation space, wherein a steering drive part that drives the steering unit is disposed hidden in an installation space within the guide housing, and a tilting drive part that drives the tilting unit is disposed hidden in an installation space within the steering housing.

The clamping apparatus for an electronic device may further include support pole installation bracket parts configured to mediate an installation of the antenna housing body to a support pole, wherein the support pole installation bracket part may include: an upper fixing bracket part configured to mediate an installation of the guide housing to the support pole; a steering rotation guide bracket part provided so that the steering housing is disposed between the guide housing and the steering rotation guide bracket part and configured to support the left-right steering rotation of the steering housing; and a lower fixing bracket part configured to mediate an installation of the steering rotation guide bracket part to the support pole.

Each of the upper fixing bracket part and the lower fixing bracket part may include: a bracket body that is tightly coupled to one side surface of the support pole; and a pair of connection bars extending from both ends of the bracket body and extending with the support pole interposed therebetween, wherein front ends of the pair of connection bars of the upper fixing bracket part may be connected to the guide housing, and front ends of the pair of connection bars of the lower fixing bracket part may be connected to the steering rotation guide bracket part.

The steering drive part may include a steering shaft vertically disposed inside the guide housing in an up and down direction, wherein one end of the steering shaft may be coupled to be form-fitted to a shaft connection part integrally provided on an upper surface of the steering housing so as to rotatably interfere in a shaft rotation direction.

The steering drive part may be installed inside the guide housing and may further include: a steering drive motor having an electrically rotatably driven motor shaft; and a reduction gear set connected to the motor shaft of the steering drive motor to receive rotational force and reduce the rotational force at a predetermined gear ratio.

The tilting drive part may include a tilting shaft horizontally disposed inside the steering housing in a left and right direction, wherein the tilting shaft may be formed at both left and right ends thereof with shaft form-fitting grooves to which tilting shaft protrusions of the tilting bracket part inserted through left and right sides of the steering housing are form-fitted.

The tilting bracket part may include: a device mounting part having a front surface to which a back surface of the antenna housing body is coupled; and a pair of tilting mounting parts that extend rearward from a back surface of the device mounting part to overlap left and right sides of the steering housing and with which the tilting shaft protrusions are integrally formed, wherein at least one of the pair of tilting mounting parts may be detachable from the device mounting part so that the tilting shaft protrusions are inserted in the left and right direction into the shaft form-fitting grooves of the tilting shaft fixed inside the steering housing.

The tilting bracket part may include: a device mounting part having a front surface to which a back surface of the antenna housing body is coupled; and a pair of tilting mounting parts that extend rearward from a back surface of the device mounting part to overlap left and right sides of the steering housing and that are formed integrally with the device mounting part, wherein the pair of tilting mounting parts may be fixed to a tilting shaft connection part including the tilting shaft protrusions inserted into the shaft form-fitting grooves of the tilting shaft.

As a lighting apparatus including a clamping apparatus for an electronic device according to an embodiment of the present disclosure, the clamping apparatus for an electronic device includes: a guide housing configured to form and provide a predetermined installation space; a steering unit including a steering housing provided to be capable of left-right steering rotation with respect to the guide housing so that a light irradiation angle from an irradiation surface of an LED element is adjusted in a left and right direction; and a tilting unit provided to be capable of back-and-forth tilting rotation with respect to the steering unit so that the light irradiation angle of the LED element is adjusted in an up and down direction, including a tilting bracket part for installing a lighting body installed with the LED element, and configured to internally form and provide a predetermined installation space, wherein a steering drive part that drives the steering unit is disposed hidden in an installation space within the guide housing, and a tilting drive part that drives the tilting unit is disposed hidden in an installation space within the steering housing.

The clamping apparatus for an electronic device may further include support pole installation bracket parts configured to mediate an installation of the lighting body to a support pole, wherein the support pole installation bracket part may include: an upper fixing bracket part configured to mediate an installation of the guide housing to the support pole; a steering rotation guide bracket part provided so that the steering housing is disposed between the guide housing and the steering rotation guide bracket part and configured to support the left-right steering rotation of the steering housing; and a lower fixing bracket part configured to mediate an installation of the steering rotation guide bracket part to the support pole.

Each of the upper fixing bracket part and the lower fixing bracket part may include: a bracket body that is tightly coupled to one side surface of the support pole; and a pair of connection bars extending from both ends of the bracket body and extending with the support pole interposed therebetween, wherein front ends of the pair of connection bars of the upper fixing bracket part may be connected to the guide housing, and front ends of the pair of connection bars of the lower fixing bracket part may be connected to the steering rotation guide bracket part.

The steering drive part may include a steering shaft vertically disposed inside the guide housing in an up and down direction, wherein one end of the steering shaft may be coupled to be form-fitted to a shaft connection part integrally provided on an upper surface of the steering housing so as to rotatably interfere in a shaft rotation direction.

The steering drive part may be installed inside the guide housing and may further include: a steering drive motor having an electrically rotatably driven motor shaft; and a reduction gear set connected to the motor shaft of the steering drive motor to receive rotational force and reduce the rotational force at a predetermined gear ratio.

The tilting drive part may include a tilting shaft horizontally disposed inside the steering housing in a left and right direction, wherein the tilting shaft may be formed at both left and right ends thereof with shaft form-fitting grooves to which tilting shaft protrusions of the tilting bracket part inserted through left and right sides of the steering housing are form-fitted.

The tilting bracket part may include: a device mounting part having a front surface to which a back surface of the lighting body is coupled; and a pair of tilting mounting parts that extend rearward from a back surface of the device mounting part to overlap left and right sides of the steering housing and with which the tilting shaft protrusions are integrally formed, wherein at least one of the pair of tilting mounting parts may be detachable from the device mounting part so that the tilting shaft protrusions are inserted in the left and right direction into the shaft form-fitting grooves of the tilting shaft fixed inside the steering housing.

The tilting bracket part may include: a device mounting part having a front surface to which a back surface of the lighting body is coupled; and a pair of tilting mounting parts that extend rearward from a back surface of the device mounting part to overlap left and right sides of the steering housing and that are formed integrally with the device mounting part, wherein the pair of tilting mounting parts may be fixed to a tilting shaft connection part including the tilting shaft protrusions inserted into the shaft form-fitting grooves of the tilting shaft.

### [Advantageous Effects]

A clamping apparatus for an electronic device, and an antenna apparatus and a lighting apparatus each including the same according to an embodiment of the present disclosure can achieve the following various effects.

First, a steering drive part for rotating a steering housing in a left and right direction is provided inside a guide housing and a tilting drive part for rotating a tilting bracket part in an up and down direction is provided inside a steering housing, thereby preventing an increase in overall volume and enabling an installation in a narrow area.

Second, the installation work of a relative heavy electronic device to a support pole is simplified, thereby ensuring the safety of workers on site.

### [Description of Drawings]

FIG. 1 is a perspective view showing the installation state of an electronic device using a clamping apparatus for an electronic device according to an embodiment of the present disclosure to a support pole.
FIG. 2 is each exploded perspective view showing an example of an antenna apparatus and a lighting apparatus among electronic devices including the clamping apparatus for an electronic device according to an embodiment of the present disclosure.
FIG. 3 is a perspective view showing a state in which an electronic device among the components of FIG. 1 is removed.
FIG. 4 is an exploded perspective view showing a state in which a steering housing and a tilting bracket part among the components of FIG. 3 are separated.
FIGS. 5A and 5B are downward and upward exploded perspective views for explaining an installation structure of the steering housing and the tilting bracket part among the components of FIG. 3 to a guide housing and a steering rotation guide bracket part.
FIGS. 6A and 6B are front and rear exploded perspective views for explaining an installation structure of an upper fixing bracket part and a lower fixing bracket part among the components of FIG. 3 to the support pole.
FIG. 7 is a perspective view (a) and a plan view (b) in which a horizontal steering operation is implemented by a steering unit among the components of FIG. 3.
FIG. 8 is a perspective view (a) and a side view (b) in which a vertical tilting operation is implemented by a tilting unit among the components of FIG. 3.
FIGS. 9A and 9B are downward and upward exploded perspective views for explaining an installation structure of a steering drive part to the guide housing among the components of FIG. 3.
FIGS. 10A and 10B are front and rear exploded perspective views for explaining a detailed configuration of the steering drive part among the components of FIG. 3.
FIG. 11 is a plan view for explaining an arrangement state of a steering shaft and a reduction gear set to the guide housing.
FIGS. 12A and 12B are front and rear exploded perspective views for explaining an installation structure of a tilting drive part to the steering housing among the components of FIG. 3.
FIGS. 13A and 13B are front and rear exploded perspective views for explaining a detailed configuration of the tilting drive part among the components of FIG. 3.
FIG. 14 is a perspective view for explaining a coupling state of the reduction gear set to a tilting shaft among components of the tilting drive part.
FIGS. 15A and 15B are downward and upward perspective views showing a clamping apparatus for an electronic device according to another embodiment of the present disclosure.
FIGS. 16A and 16B are exploded perspective views of FIGS. 15A and 15B.
FIGS. 17A and 17B are exploded perspective views in one direction and the other direction of a steering unit among components of the clamping apparatus for an electronic device according to another embodiment of the present disclosure.
FIGS. 18A and 18B are downward and upward exploded perspective views showing a tilting unit among components of the clamping apparatus for an electronic device according to another embodiment of the present disclosure.

**<Description of reference numerals>**

| | | | |
|---|---|---|---|
| 1: | clamping apparatus for an electronic device | | |
| A-1: | antenna apparatus | | |
| A-2: | lighting apparatus | | |
| 50A: | upper fixing bracket part | | |
| 50B: | lower fixing bracket part | 70A: | guide housing |
| 70B: | steering rotation guide bracket part | | |
| 100: | steering unit | | |
| 100A: | steering drive part | 100H: | steering housing |
| 110: | steering drive motor | | |
| 120: | reduction gear set | | |
| 130: | gear set | 140: | steering shaft |
| 200: | tilting unit | 200A: | tilting drive part |
| 200B: | tilting bracket part | 210: | tilting drive motor |
| 220: | reduction gear set | 230: | gear set |
| 240: | tilting shaft | | |

### [Mode for Invention]

Hereinafter, a clamping apparatus for an electronic device, and an antenna apparatus and a lightning apparatus each including the same according to an embodiment of the present disclosure are described in detail with reference to the accompanying drawings.

It is to be noted that in assigning reference numerals to elements in the drawings, the same reference numerals denote the same elements as much as possible even in cases where the elements are shown in different drawings. Furthermore, in describing the embodiments of the present disclosure, a detailed description of the known configurations or functions will be omitted if it is deemed to obscure the understanding for the embodiments of the present disclosure.

In describing the elements of an embodiment of the present disclosure, terms, such as the first, the second, A, B, (a), and (b) may be used. However, the terms are used only to distinguish one element from the other element, and the essence, order, or sequence of the elements is not limited by the terms. Furthermore, unless otherwise defined, all terms used herein including technical or scientific terms have the same meanings as generally understood by those skilled in the art to which the present disclosure pertains. The terms, such as terms defined in dictionaries, which are generally used, should be construed as having meanings identical to contextual meanings of the related art, and are not construed as having ideal or excessively formal meanings unless they are definitely defined in the present disclosure.

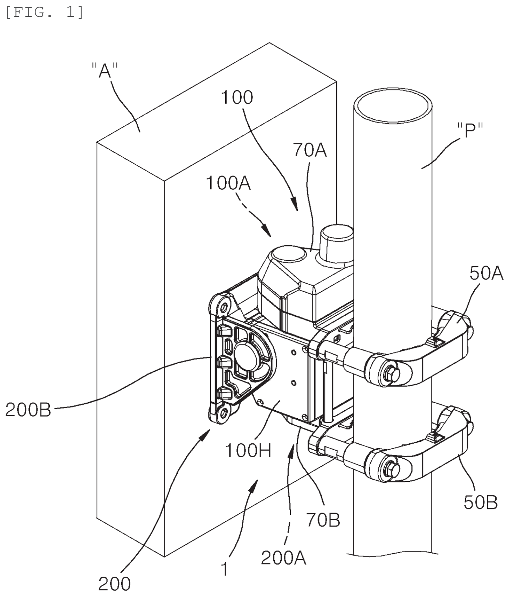

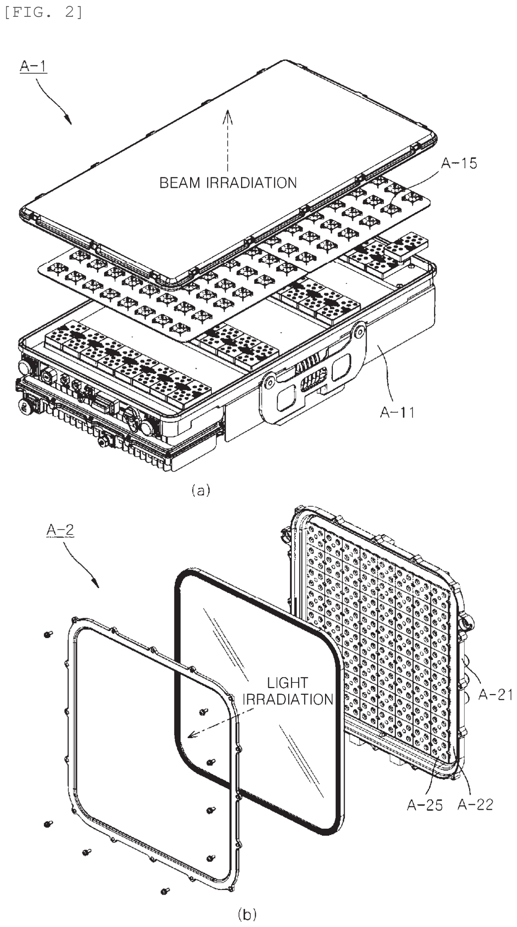

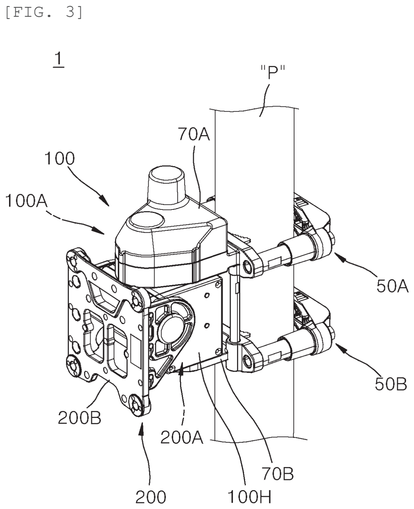

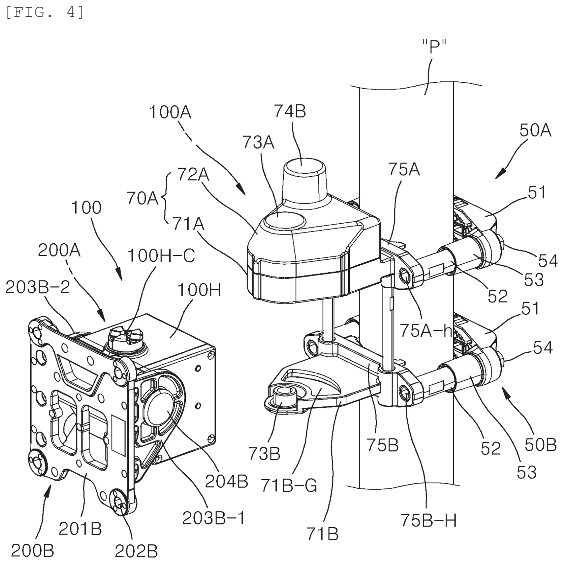

FIG. 1 is a perspective view showing the installation state of an electronic device using a clamping apparatus for an electronic device according to an embodiment of the present disclosure to a support pole, FIG. 2 is each exploded perspective view showing an example of an antenna apparatus and a lighting apparatus among electronic devices including the clamping apparatus for an electronic device according to an embodiment of the present disclosure, FIG. 3 is a perspective view showing a state in which an electronic device among the components of FIG. 1 is removed, and FIG. 4 is an exploded perspective view showing a state in which a steering housing and a tilting bracket part among the components of FIG. 3 are separated.

As shown in FIGS. 1 to 4, a clamping apparatus 1 for an electronic device according to an embodiment of the present disclosure mediates the installation of an electronic device A to a support pole P, and simultaneously performs a function of enabling detailed directionality setting to satisfy directional design of various oscillating elements (e.g., when the electronic device A is adopted as an antenna apparatus, beamforming of frequency beams oscillated from the electronic device A) generated through the electronic device A with respect to the support pole P in a stationary state.

The electronic device A expected to be directionally adjusted by the clamping apparatuses 1 and 1A according to embodiments of the present disclosure is not limited to an antenna apparatus A-1 shown in FIG. 2 (a), and may include any electronic devices A that require directional adjustment of oscillating elements through an electrical operation, such as a lighting apparatus A-2 shown in FIG. 2 (b), a laser oscillating device, or an air conditioning device.

However, since the main business purpose of the applicant of the present disclosure is to manufacture and sell an antenna apparatus requiring directionality adjustment among the electronic devices A, the following description is given on the assumption that the antenna apparatus A-1 among the above electronic devices is applied. However, the scope of the present disclosure should not be construed as being limited to the clamping apparatuses 1 and 1A applied to the antenna apparatus A-1.

Therefore, all terms including "antenna apparatus A-1" or "antenna" and "lighting apparatus A-2" or "lighting" to be described below should be broadly interpreted to mean an "electronic device" or a "device".

The following description is given on the assumption that, when the clamping apparatus for an electronic device according to an embodiment of the present disclosure is applied to an antenna apparatus, it is defined as an "antenna apparatus 1 (A-1) including the clamping apparatus for an electronic device", and when the clamping apparatus for an electronic device according to an embodiment of the present disclosure is applied to a lighting apparatus, it is defined as a "lighting apparatus 1 (A-2) including the clamping apparatus for an electronic device".

More specifically, as shown in FIGS. 1 to 4, the clamping apparatus 1 for an electronic device according to an embodiment of the present disclosure may be coupled spaced apart by a predetermined distance in a horizontal direction to be installed in a substantially cantilever shape in a direction orthogonal to the longitudinal direction of the vertically installed support pole P via an upper fixing bracket part 50A and a lower fixing bracket part 50B already provided around an outer peripheral surface of the support pole P.

Referring to FIGS. 1 to 4, the clamping apparatus 1 for an electronic device according to an embodiment of the present disclosure includes a pair of support pole installation bracket parts 50A and 50B provided to mediate the installation of the electronic device A to the support pole P, a guide housing 70A connected to any one of the support pole installation bracket parts 50A and 50B, a steering unit 100 including a steering housing 100H provided to be capable of left-right steering rotation with respect to the guide housing 70A, and a tilting unit 200 including a tilting bracket part 200B provided to be capable of back-and-forth tilting rotation with respect to the steering unit 100.

In particular, in the case of the antenna apparatus A-1 including the clamping apparatus 1 for an electronic device according to an embodiment of the present disclosure, the steering unit 100 serves to enable left-right steering rotation with respect to the guide housing 70A so as to adjust a beam irradiation angle from an irradiation surface of an antenna element A-15 in a left and right direction, and the tilting unit 200 serves to enable back-and-forth tilting rotation with respect to the steering unit 100 so as to adjust the beam irradiation angle of the antenna element A-15 in an up and down direction by mediating the installation of an antenna housing body A-11 via the tilting bracket part 200B, as shown in FIG. 2(a).

In addition, in the case of the lighting apparatus A-2 including the clamping apparatus 1 for an electronic device according to an embodiment of the present disclosure, the steering unit 100 serves to enable left-right steering rotation with respect to the guide housing 70A so as to adjust a light irradiation angle from an irradiation surface of an LED element A-25 mounted on an LED substrate A-22 in the left and right direction, and the tilting unit 200 serves to enable back-and-forth tilting rotation with respect to the steering unit 100 so as to adjust the light irradiation angle of the LED element A-25 in the up and down direction by mediating the installation of a lighting body A-21 via the tilting bracket part 200B, as shown in FIG. 2(b).

As shown in FIGS. 1 to 4, the pair of support pole installation bracket parts 50A and 50B include the upper fixing bracket part 50A that is disposed relatively on an upper side of the support pole P and mediates the installation of the guide housing 70A to the support pole P, a steering rotation guide bracket part 70B that is provided so that the steering housing 100H is disposed between the guide housing 70A and the steering rotation guide bracket part 70B and supports the left-right steering rotation of the steering housing 100H, and the lower fixing bracket part 50B that mediates the installation of the steering rotation guide bracket part 70B to the support pole P.

Each of the upper fixing bracket part 50A and the lower fixing bracket part 50B may include a bracket body 51 that is tightly coupled to one side surface of the support pole P, and a pair of connection bars 52 extending from both ends of the bracket body 51 and extending with the support pole P interposed therebetween.

The pair of connection bars 52 are respectively coupled to connection bar fastening terminals 53 provided in the form of bosses at both ends of the bracket body 51, and may be firmly fixed by stud fixing bolts 54 that penetrate the connection bar fastening terminals 53 and are fastened to the guide housing 70A and the steering rotation guide bracket part 70B sides, respectively, from the outside of the bracket body 51.

Bolt fastening holes 75A-h may be formed at both ends of the guide housing 70A and bolt fastening holes 75B-h may be formed both ends of the steering rotation guide bracket part 70B, thereby allowing the stud fixing bolts 54 to be fastened by penetrating the centers of the connection bar fastening terminals 53 and the pair of connection bars 52.

Front ends of the pair of connection bars 52 of the upper fixing bracket part 50A may be connected to the bolt fastening holes 75A-h formed in an upper support pole clamping terminal 75A included in the guide housing 70A, and front ends of the pair of connection bars 52 of the lower fixing bracket part 50B may be connected to the bolt fastening holes 75B-h formed in a lower support pole clamping terminal 75B included in the steering rotation guide bracket part 70B.

Similar to the upper fixing bracket part 50A and the lower fixing bracket part 50B described above, rear ends of the guide housing 70A and the steering rotation guide bracket part 70B may be respectively formed integrally with the upper support pole clamping terminal 75A and the lower support pole clamping terminal 75B, which are formed in close contact with the other side surface of the support pole P (front outer peripheral surface in the present disclosure).

The guide housing 70A, as described below, serves to provide a steering drive part installation space 100S for accommodating a steering drive part 100A among components of the steering unit 100, and simultaneously may serve to mediate coupling to the support pole P together with the upper fixing bracket part 50A and the lower fixing bracket part 50B through the integral provision of the upper support pole clamping terminal 75A.

Likewise, the steering rotation guide bracket part 70B, as described below, serves to support the steering rotation movement of the steering housing 100H among the components of the steering unit 100 in the left and right direction, and simultaneously may serve to mediate coupling to the support pole P together with the upper fixing bracket part 50A and the lower fixing bracket part 50B through the integral provision of the lower support pole clamping terminal 75B.

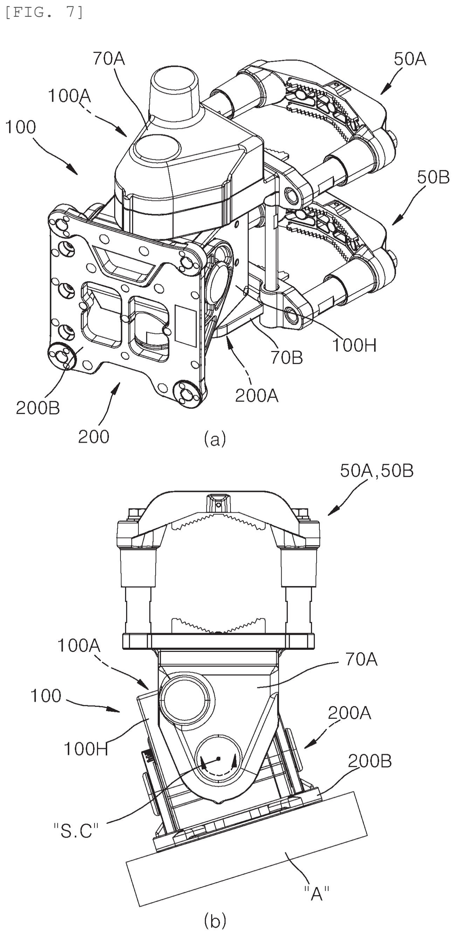

As shown in FIGS. 1 to 4, the steering unit 100 may include the steering drive part 100A disposed hidden inside the guide housing 70A, a steering shaft 140 that rotates about a vertically disposed rotation shaft (see reference numeral "S.C" in FIG. 7 to be described below) by the rotational force provided by the driving of the steering drive part 100A, and the steering housing 100H that is connected to the steering shaft 140, has a tilting drive part 200A of the tilting unit 200, which is described below and hidden inside, and performs left-right steering rotation between the guide housing 70A and the steering rotation guide bracket part 70B.

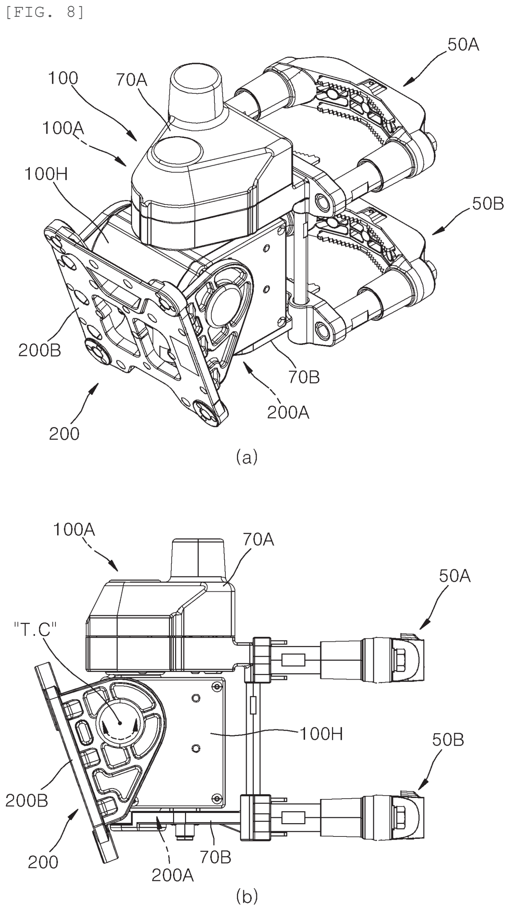

In addition, as shown in FIGS. 1 to 4, the tilting unit 200 may include the tilting drive part 200A disposed hidden inside the steering housing 100H, a tilting shaft 240 that rotates about a rotation shaft (see reference numeral "T.C" in FIG. 8 to be described below) horizontally disposed forward and backward by the rotational force provided by the driving of the tilting drive part 200A, and the tilting bracket part 200B that is connected to the tilting shaft 240, has the electronic device A fixed to the front surface thereof, and has upper and lower ends tilted and rotated in the up and down direction on the left and right sides of the steering housing 100H, respectively.

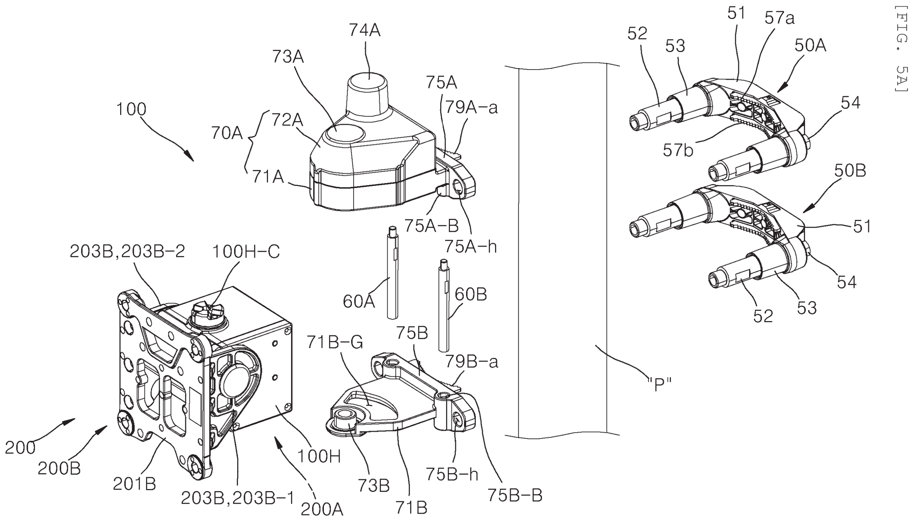

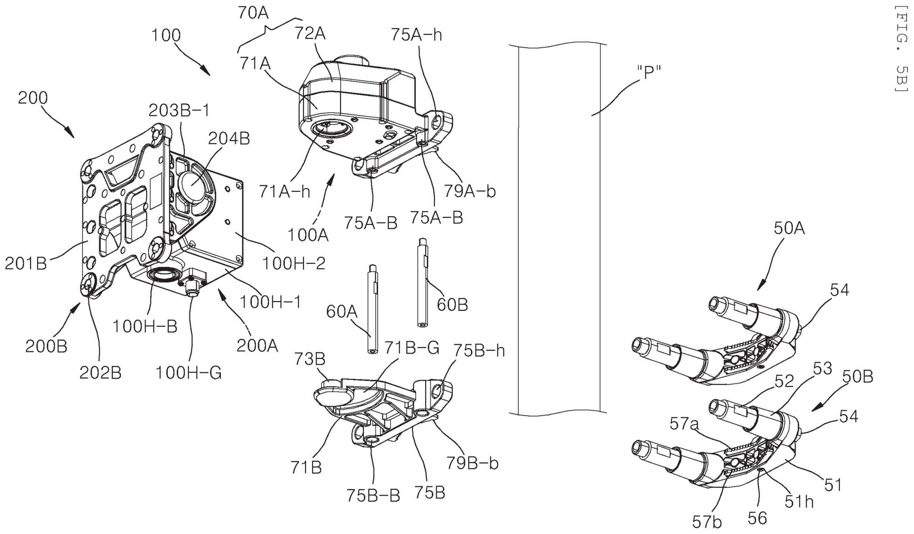

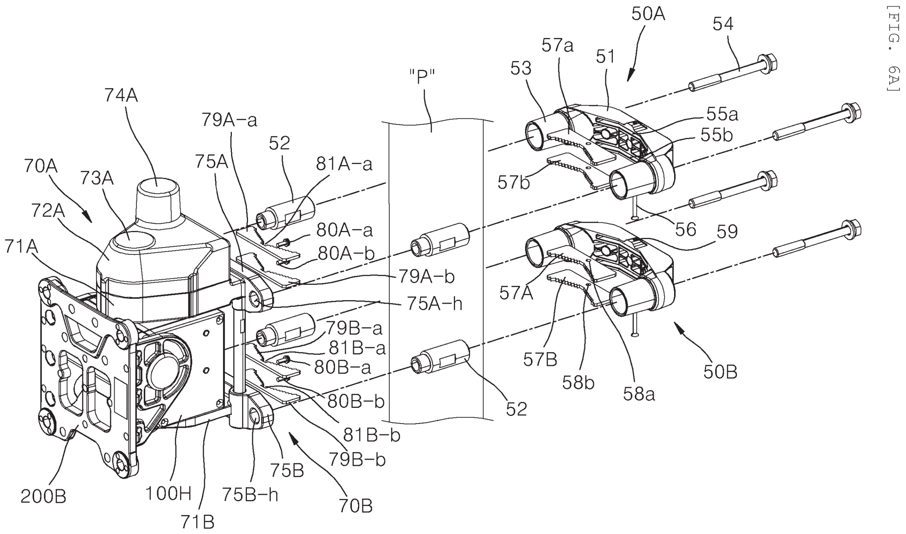

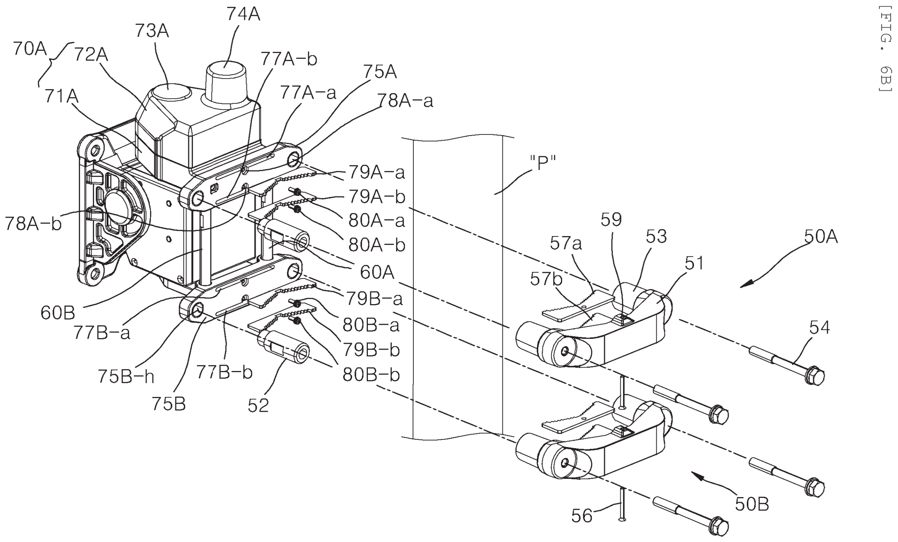

FIGS. 5A and 5B are downward and upward exploded perspective views for explaining an installation structure of the steering housing and the tilting bracket part among the components of FIG. 3 to the guide housing and the steering rotation guide bracket part, and FIGS. 6A and 6B are front and rear exploded perspective views for explaining an installation structure of the upper fixing bracket part and the lower fixing bracket part among the components of FIG. 3 to the support pole.

As shown in FIGS. 5A and 5B, the upper fixing bracket part 50A and the lower fixing bracket part 50B are closely disposed so that the bracket body 51 surrounds one side surface (rear outer peripheral surface in an embodiment of the present disclosure) of the support pole P together with the pair of connection bars 52, and the upper support pole clamping terminal 75A and the lower support pole clamping terminal 75B of the guide housing 70A are closely disposed on the upper side and the lower side of the other side surface (front outer peripheral surface in an embodiment of the present disclosure) of the support pole P. Subsequently, the upper fixing bracket part 50A is coupled to the upper support pole clamping terminal 75A by using the stud fixing bolts 54 and the lower fixing bracket part 50B is coupled to the lower support pole clamping terminal 75B by using the stud fixing bolts 54.

A pair of clamping gear panels 57a and 57b may be installed in gear installation grooves 55a and 55b of the bracket body 51 of the upper fixing bracket part 50A.

The pair of clamping gear panels 57a and 57b are respectively formed with pin penetration holes 58a and 58b, into which a single fixing pin 56 is inserted for fastening, and the single fixing pin 56 simultaneously penetrates gear panel fixing holes 59 and the pin penetration holes 58a and 58b formed to penetrate the bracket body 51 in the up and down direction, so that the two clamping gear panels 57a and 57b may be simultaneously fixed to the gear installation grooves 55a and 55b.

In addition, a pair of gear installation grooves 77A-a and 77A-b for installing a pair of clamping gear panels 79A-a and 79A-b may be formed in the upper support pole clamping terminal 75A of the guide housing 70A and a pair of gear installation grooves 77B-a and 77B-b for installing a pair of clamping gear panels 79B-a and 79B-b may be formed in the lower support pole clamping terminal 75B of the steering rotation guide bracket part 70B.

Here, a locking groove (see 81A-a, etc.), to which each of head portions of fastening screws 80A-a, 80A-b, 80B-a, and 80B-b is locked, is formed in the middle portion of each of the clamping gear panels 79A-a, 79A-b, 79B-a, and 79B-b, and while each of the fastening screws 80A-a, 80A-b, 80B-a, and 80B-b is fastened to a screw fastening hole (see 78A-a, etc.), each of the head portions is locked to the locking groove (see 81A-a, etc.), so that the clamping gear panels 79A-a, 79A-b, 79B-a, and 79B-b are fixed to the gear installation grooves 77A-a, 77A-b, 77B-a, and 77B-b, respectively.

On the other hand, the upper support pole clamping terminal 75A of the guide housing 70A and the lower support pole clamping terminal 75B of the steering rotation guide bracket part 70B may be connected via upper and lower stud fixing poles 60A and 60B so that a mutual vertical distance can be firmly maintained.

More specifically, bolt connection bosses 75A-B and 75B-B are formed at the upper support pole clamping terminal 75A and the lower support pole clamping terminal 75B, respectively, and upper and lower ends of the upper stud fixing pole 60A and upper and lower ends of the lower stud fixing pole 60B are firmly fastened to the bolt connection bosses 75A-B and 75B-B, respectively, so that the guide housing 70A and the steering rotation guide bracket part 70B may be connected at four points.

However, the upper and lower stud fixing poles 60A and 60B may be fastened during the process of fixing the steering housing 100H between the guide housing 70A and the steering rotation guide bracket part 70B.

Although not shown, the lower ends of the upper and lower stud fixing poles 60A and 60B may be additionally secured by stud fixing bolts that penetrate the bolt connection boss 75B-B formed at the lower support pole clamping terminal 75B from the bottom to the top.

As shown in FIGS. 5A and 5B, the steering rotation guide bracket part 70B may include a horizontal bracket panel 71B formed integrally with the aforementioned lower support pole clamping terminal 75B and pivotally supporting a lower surface of the steering housing 100H.

A steering guide protrusion 73B may be formed at the front end of the horizontal bracket panel 71B to protrude upward. A steering rotation guide boss 100H-B, into which the steering guide protrusion 73B is inserted, may be formed integrally with the lower surface of the steering housing 100H to perform the same function as the steering rotation shaft S.C.

Accordingly, when the steering housing 100H is steered and rotated in the left and right direction by the driving of the steering drive part 100A provided inside the guide housing 70A, the upper end of the steering housing 100H rotates about a shaft connection part 100H-C form-fitted to the lower end of the steering shaft 140, and the lower end of the steering housing 100H rotates about the aforementioned steering rotation guide boss 100H-B, the steering housing 100H is stably steered and rotated.

FIG. 7 is a perspective view (a) and a plan view (b) in which a horizontal steering operation is implemented by the steering unit among the components of FIG. 3, and FIG. 8 is a perspective view (a) and a side view (b) in which a vertical tilting operation is implemented by the tilting unit among the components of FIG. 3.

When the electronic device A is installed on the tilting bracket part 200B via the clamping apparatus 1 for an electronic device according to an embodiment of the present disclosure, the directionality for directionality design optimization of the electronic device A (particularly, when the electronic device A is the antenna apparatus A-1, beam forming generated therefrom) can be set through the steering rotation operation of the steering unit 100 and the tilting rotation operation of the tilting unit 200, as shown in FIGS. 7 and 8.

More specifically, as shown in FIG. 7, the left and right directionality of the electronic device A can be adjusted by rotating the steering housing 100H between the guide housing 70A and the steering rotation guide bracket part 70B in the left and right direction within a predetermined angular range by using the steering drive part 100A disposed hidden inside the guide housing 70A.

In addition, as shown in FIG. 8, the up-down directionality of the electronic device A can be adjusted by rotating the tilting bracket part 200B about the tilting rotation shaft T.C. on the left and right sides of the steering housing 100H in the up and down direction within a predetermined angular range by using the tilting drive part 200A disposed hidden inside the steering housing 100H.

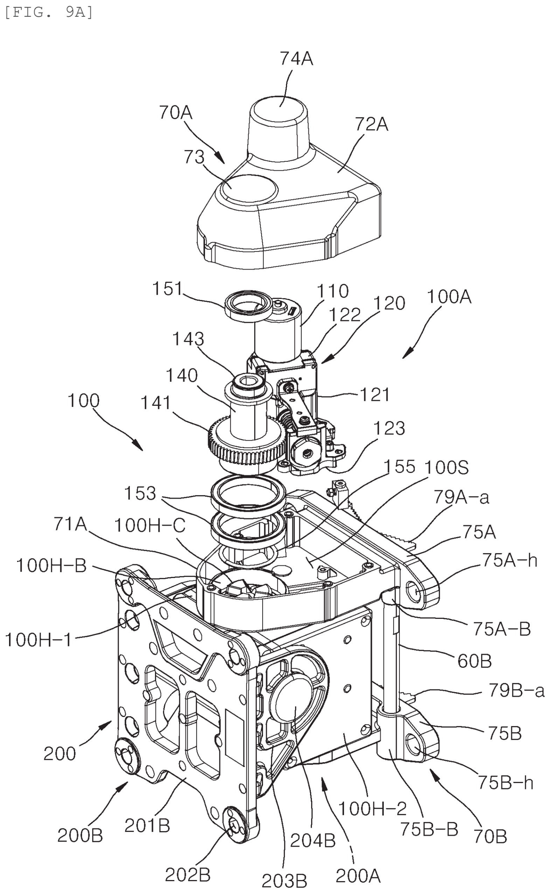

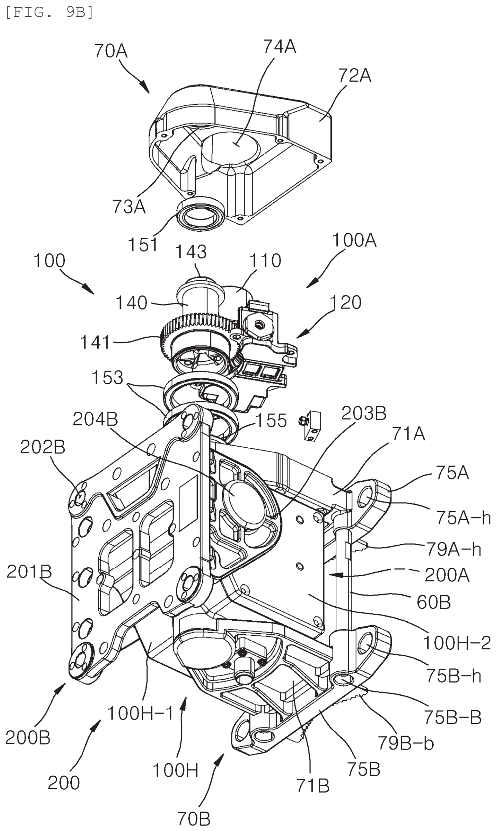

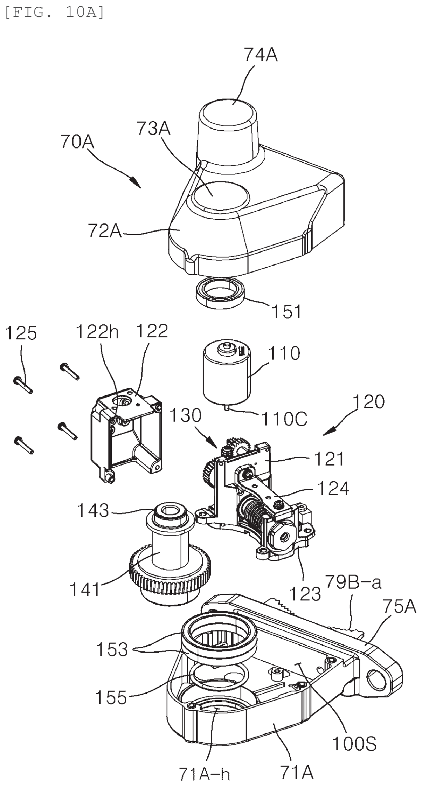

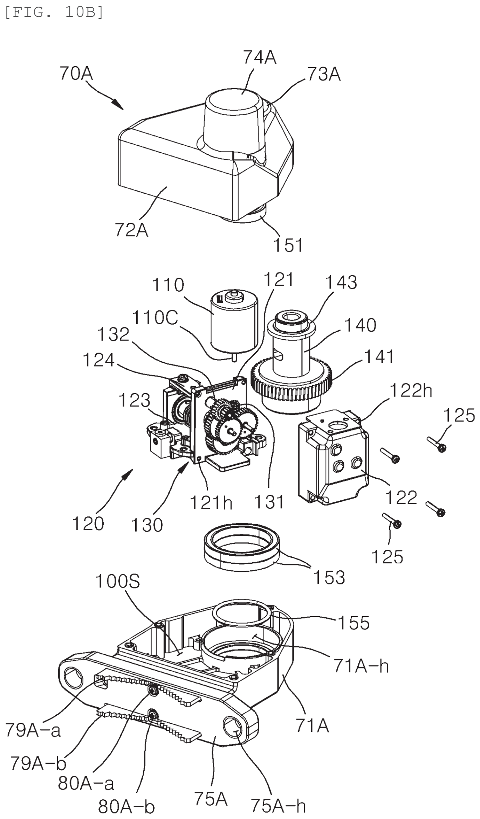

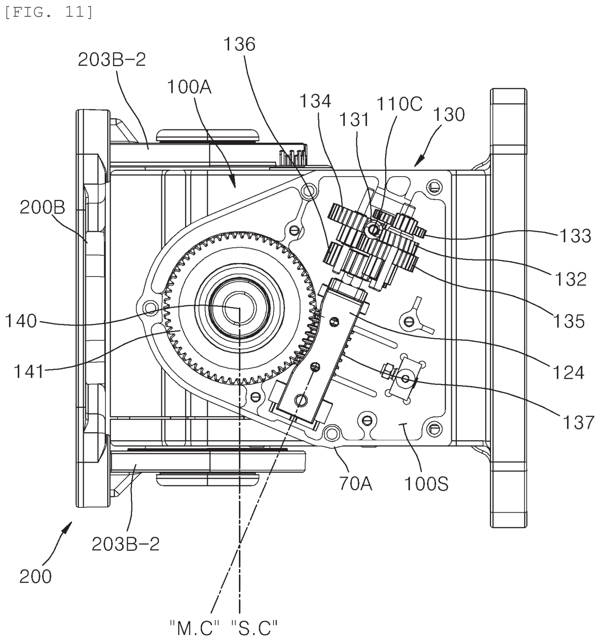

FIGS. 9A and 9B are downward and upward exploded perspective views for explaining an installation structure of the steering drive part to the guide housing among the components of FIG. 3, FIGS. 10A and 10B are front and rear exploded perspective views for explaining a detailed configuration of the steering drive part among the components of FIG. 3, and FIG. 11 is a plan view for explaining an arrangement state of the steering shaft and a reduction gear set to the guide housing.

In the clamping apparatus 1 for an electronic device according to an embodiment of the present disclosure and the antenna apparatus 1 (A-1) and the lighting apparatus 1 (A-2) each including the same, as shown in FIGS. 9A, 9B, 10A, 10B, and 11, the steering unit 100 may include the steering drive part 100A disposed hidden inside the guide housing 70A, and the steering shaft 140 vertically disposed inside the guide housing 70A in the up and down direction.

The steering drive part 100A may include a steering drive motor 110 installed inside the guide housing 70A and having an electrically rotatably driven motor shaft 110C, and a reduction gear set 120 connected to the motor shaft 110C of the steering drive motor 110 to receive rotational force and reduce the rotational force at a predetermined gear ratio.

The reduction gear set 120 may include a gear fixing panel 121 installed via motor mounting brackets 123 and 124, and a gearbox housing 122 and a gear set 130 coupled to the gear fixing panel 121.

The gear fixing panel 121 is formed with a plurality of screw fastening holes 121h, and the gearbox housing 122 is also formed with a plurality of screw through holes 122h. A plurality of fastening screws 125 are fastened through the screw fastening holes 121h and the screw through holes 122h, thereby allowing a partial configuration of the gear set 130 to be installed inside the gearbox housing 122.

On the other hand, an output worm gear 137 of the gear set 130 may be exposed on the outside of the gearbox housing 122. The output worm gear 137 serves as a transmission gear that receives rotational force reduced by other gear configurations of the gear set 130 and transmits the received rotational force to the steering shaft 140.

As shown in FIG. 10, the gear set 130 may include a first worm gear 131 that is connected to the motor shaft 110C of the steering drive motor 110 and rotated, and first to fifth reduction gears 132 to 136 sequentially disposed from the first worm gear 131 and engaged with one another to reduce the speed.

The fifth reduction gear 136 is directly connected to the rotation shaft of the output worm gear 137 to rotate the output worm gear 137 in an axial direction, and worm gear teeth provided on an outer peripheral surface of the output worm gear 137 are engaged with a pinion gear part 141 of the steering shaft 140, thereby rotating the steering shaft 140 in the axial direction.

As shown in FIG. 11, the output worm gear 137 including the fifth reduction gear 136 is disposed horizontally in the guide housing 70A, but may be disposed to be offset at a predetermined angle with respect to the axial direction (e.g., the tilting rotation shaft (T.C.) of the tilting shaft 240 of the tilting unit 200 to be described below.

In this way, since the axial direction of the output worm gear 137 and the axial direction of the tilting shaft 240 are offset at a predetermined angle, even though the weight of the electronic device A, such as the antenna apparatus A-1 having a heavy weight, affects the steering housing 100H during the tilting operation of the tilting bracket part 200B, the engagement force between the worm gear teeth of the output worm gear 137 and the pinion gear part 141 of the steering shaft 140 can be prevented from being reduced. Accordingly, even when the electronic device A is shaken by external force (e.g., strong wind), it is possible to ensure the stability of the steering rotation operation.

On the other hand, as shown in FIGS. 9A and 9B, the guide housing 70A may include a lower guide housing 71A with which the upper support clamping terminal 75A is integrally formed, and an upper guide housing 72A that covers an upper portion of the lower guide housing 71A, internally forms the installation space 100S for the steering drive part 100A, and provides the installation space 100S.

The upper guide housing 72A may be formed with a shaft seating groove 73A protruding upward, on which an upper end 143 of the steering shaft 140 is seated, and may be formed with a motor installation groove 74A protruding upward, in which the steering drive motor 110 is accommodated.

In the shaft seating groove 73A, the upper end 143 of the steering shaft 140 can be rotatably installed while being rotatably supported by a shaft support bearing 151.

As described above, in the lower guide housing 71A, the motor installation brackets 123 and 124 can be firmly fixed, and a shaft through hole 71A-h can be formed so that the lower end of the steering shaft 140 can be penetrated and coupled to be form-fitted to the shaft connection part 100H-C integrally provided on the upper surface of the steering housing 100H.

That is, the steering shaft 140 may be provided at the lower end thereof with a plurality of cam interference surfaces (not shown) that rotate in the shaft rotation direction and interfere with the shaft connection part 100H-C, and can be rotatably coupled to the shaft connection part 100H-C integrally provided on the upper surface of the steering housing 100H by penetrating the shaft through hole 71A-h and being form-fitted to the shaft connection part 100H-C. In such a case, a plurality of rotational support bearings 153 are interposed around the inner peripheral end of the shaft through hole 71A-h, so that the steering shaft 140 can be rotatably supported.

In addition, it is of course that an O-ring 155 is installed around the periphery of the shaft through hole 71A-h to prevent rainwater and the like from entering the interior.

The shaft connection part 100H-C integrally provided on the upper surface of the steering housing 100H may be configured to receive the rotational force of the steering drive part 100A and rotate the steering housing 100H itself about the steering rotation shaft S.C in the left and right direction.

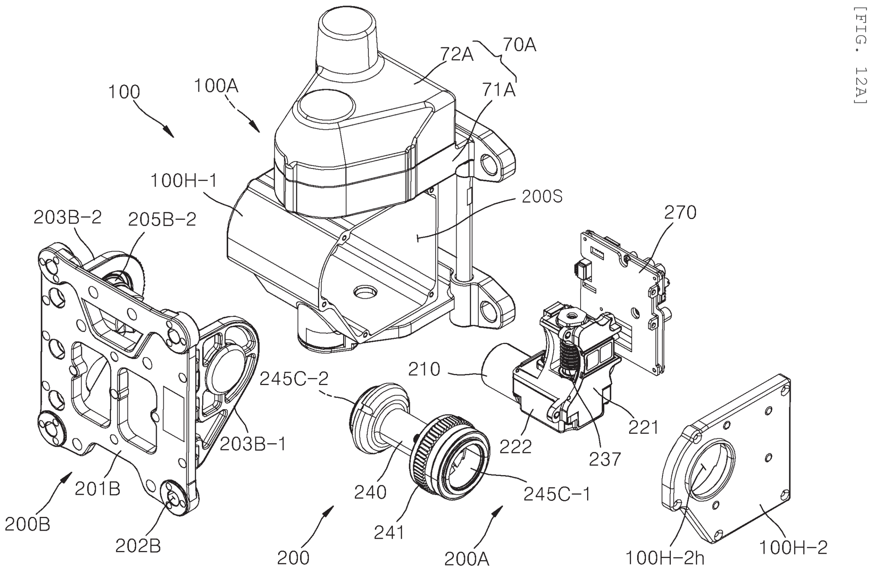

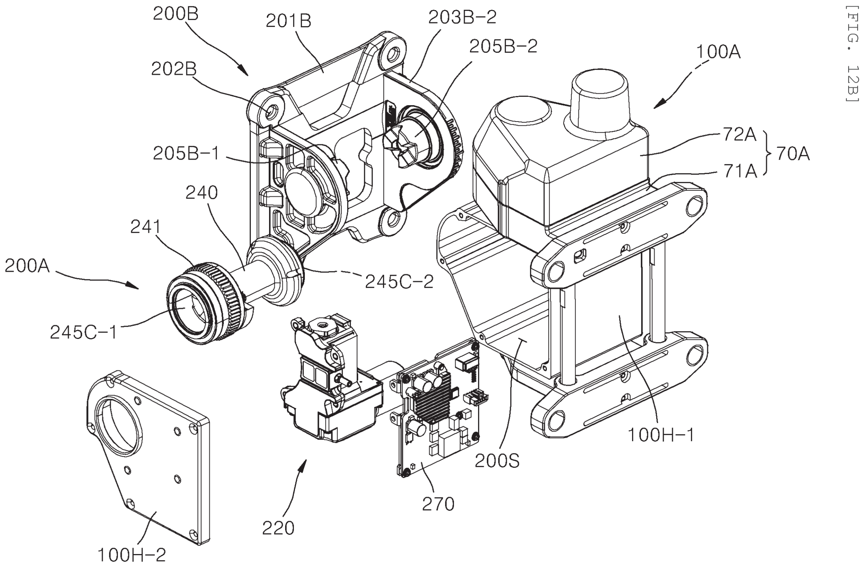

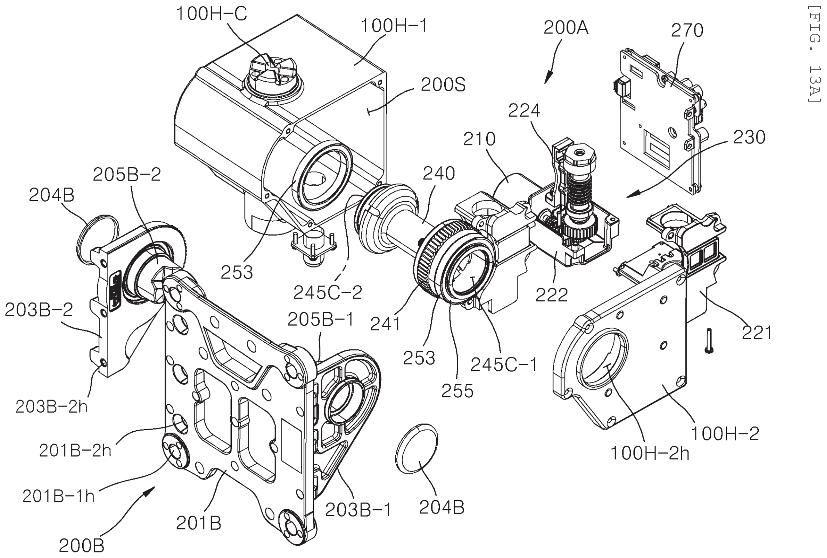

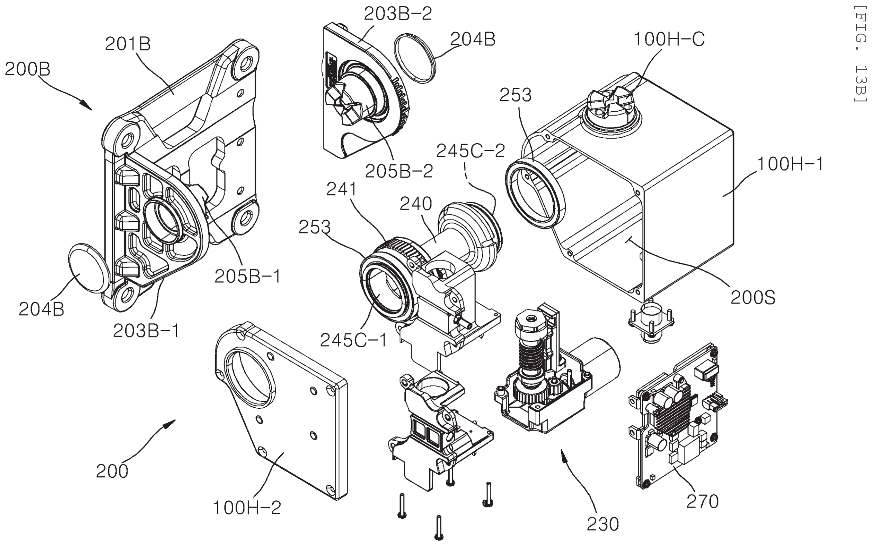

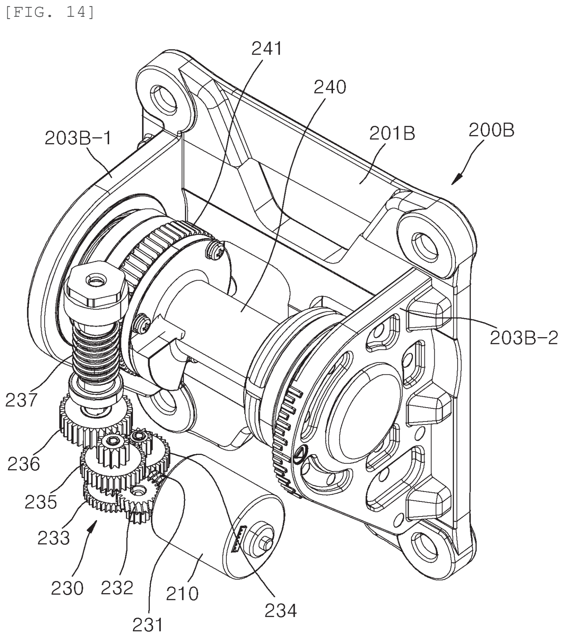

FIGS. 12A and 12B are front and rear exploded perspective views for explaining an installation structure of the tilting drive part to the steering housing among the components of FIG. 3, FIGS. 13A and 13B are front and rear exploded perspective views for explaining a detailed configuration of the tilting drive part among the components of FIG. 3, and FIG. 14 is a perspective view for explaining a coupling state of the reduction gear set to the tilting shaft among components of the tilting drive part.

In the clamping apparatus 1 for an electronic device according to an embodiment of the present disclosure and the antenna apparatus 1 (A-1) and the lighting apparatus 1 (A-2) each including the same, as shown in FIGS. 12A, 12B, 13A, 13B, and 14, the tilting unit 200 may include the tilting drive part 200A disposed hidden inside the steering housing 100H, and the tilting shaft 240 horizontally disposed inside the steering housing 100H in the left and right direction.

The tilting drive part 200A may include a tilting drive motor 210 installed inside the steering housing 100H and having an electrically rotatably driven motor shaft (not shown), and a reduction gear set 220 connected to a motor shaft of the tilting drive motor 210 to receive rotational force and reduce the rotational force at a predetermined gear ratio.

The reduction gear set 220 may include a gear set 230 installed via motor installation brackets 221 and 222.

The motor shaft of the tilting drive motor 210 is rotatably connected to the motor installation brackets 221 and 222, and an output worm gear 237 of the gear set 230 may be vertically disposed in the up and down direction. The output worm gear 237 serves as a transmission gear that receives rotational force reduced by other gear configurations of the gear set 230 and transmits the received rotational force to the tilting shaft 240.

As shown in FIG. 14, the gear set 230 may include a first worm gear 231 that is connected to the motor shaft of the tilting drive motor 210 and rotated, and first to fifth reduction gears 232 to 236 sequentially disposed from the first worm gear 231 and engaged with one another to reduce the speed.

The fifth reduction gear 236 is directly connected to the rotation shaft of the output worm gear 237 to rotate the output worm gear 237 in an axial direction, and worm gear teeth provided on an outer peripheral surface of the output worm gear 237 are engaged with a pinion gear part 241 of the steering shaft 240, thereby rotating the steering shaft 240 in the axial direction.

As shown in FIGS. 12A, 12B, 13A, and 13B, the steering housing 100H may include a housing body 100H-1 having an opening on either the left or right side thereof and forming an installation space 200S where a tilting drive part 200A can be hidden, and a housing cover 100H-2 coupled to shield the open side of the housing body 100H-1.

Each of the housing body 100H-1 and the housing cover 100H-2 may be formed with a shaft through hole 100H-2h for exposing one end and the other end of the tilting shaft 240 disposed horizontally in the installation space 200S in the left and right direction.

In addition, a power connector (see "100H-G" in FIG. 5) may protrude downward from the lower portion of the housing body 100H-1 of the steering housing 100H.

As described above, the steering housing 100H is provided to be rotatable in the left and right direction between the guide housing 70A and the steering rotation guide bracket part 70B. An interference avoidance hole 71B-G may be provided vertically through the steering rotation guide bracket part 70B to prevent interference with the power connector 100H-G of the steering housing 100H.

More specifically, the interference avoidance hole 71B-G may be formed in a shape that matches the trajectory of the rotation radius of the power connector 100H-G when the steering housing 100H performs a steering rotation operation.

In this way, the power connector 100H-G rotates within a predetermined trajectory based on the steering rotation guide boss 100H-B through the interference avoidance hole 71B-G, thereby additionally performing a function of substantially guiding the left-right steering rotation of the steering housing 100H.

As shown in FIGS. 12A, 12B, 13A, and 13B, the installation space 200S of the steering housing 100H may further include a control board 270 that receives power from the aforementioned power connector 100H-G and controls the operations of the steering drive motor 110 of the steering drive part 100A and the tilting drive motor 210 of the tilting drive part 200A.

In addition, as shown in FIGS. 12A, 12B, 13A, and 13B, the tilting bracket part 200B may include a device mounting part 201B having a front surface to which a back surface of the electronic device A is coupled, and a pair of tilting mounting parts 203B-1 and 203B-2 that extend rearward from a back surface of the device mounting part 201B to overlap the left and right sides of the steering housing 100H and with which tilting shaft protrusions 205B-1 and 205B-2 are integrally formed.

At least one (203B-2 in an embodiment of the present disclosure) of the pair of tilting mounting parts 203B-1 and 203B-2 may be detachable from the device mounting part 201B so that the tilting shaft protrusions 205B-1 and 205B-2 are inserted in the left and right direction into shaft form-fitting grooves 245C-1 and 245C-2 of the tilting shaft 240 fixed inside the steering housing 100H.

That is, the tilting shaft protrusion 205B-1 included in the tilting mounting part 203B-1 and the tilting shaft protrusion 205B-2 included in the tilting mounting part 203B-2 are inserted into the shaft through holes 100H-2h inside the steering housing 100H and then inserted into the shaft form-fitting grooves 245C-1 and 245C-2 formed at both ends of the tilting shaft 240, so that smooth assembly is possible without assembly interference with the steering housing 100H.

In accordance with the clamping apparatus 1 for an electronic device configured as above according to an embodiment of the present disclosure and the antenna apparatus 1 (A-1) and the lighting apparatus 1 (A-2) each including the same, the steering rotation guide boss 100H-B formed at the lower portion of the steering housing 100H is hinge-coupled to the steering guide protrusion 73B formed on the steering rotation guide bracket part 70B, so that the steering housing 100H can be simply seated on the steering rotation guide bracket part 70B and coupled to the support pole P, thereby ensuring the safety of workers on site.

In addition, in the clamping apparatus 1 for an electronic device according to an embodiment of the present disclosure and the antenna apparatus 1 (A-1) and the lighting apparatus 1 (A-2) each including the same, the steering drive part 100A is disposed hidden inside the guide housing 70A and the tilting drive part 200A is disposed hidden inside the steering housing 100H, thereby preventing expansion of the size of an overall product in the up and down direction or a front and rear direction and improving installation expandability in narrow spaces.

On the other hand, a plurality of antenna coupling holes 201B-1h for bolt coupling with the electronic device A may be formed through the ends of respective edges of the device mounting part 201B in the front and back direction.

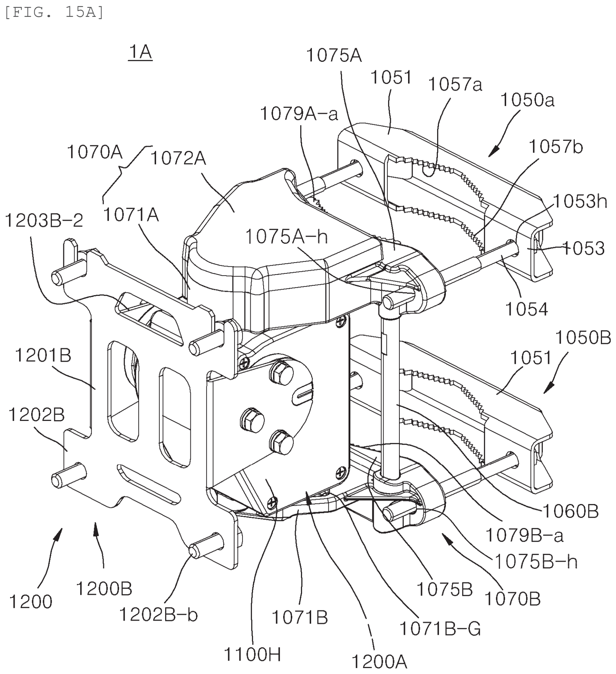

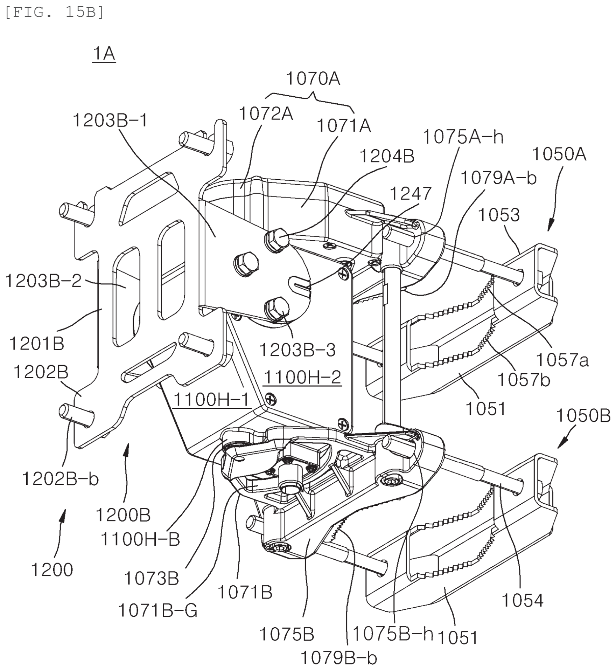

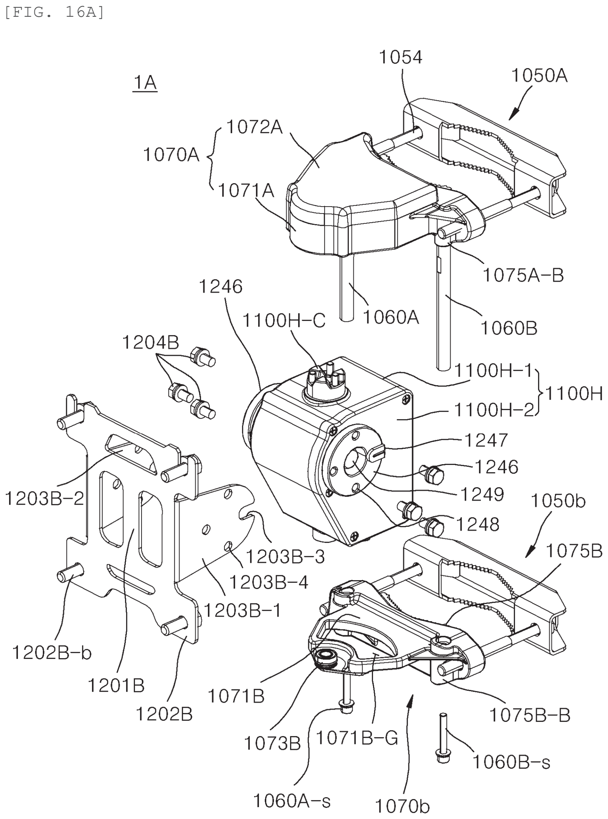

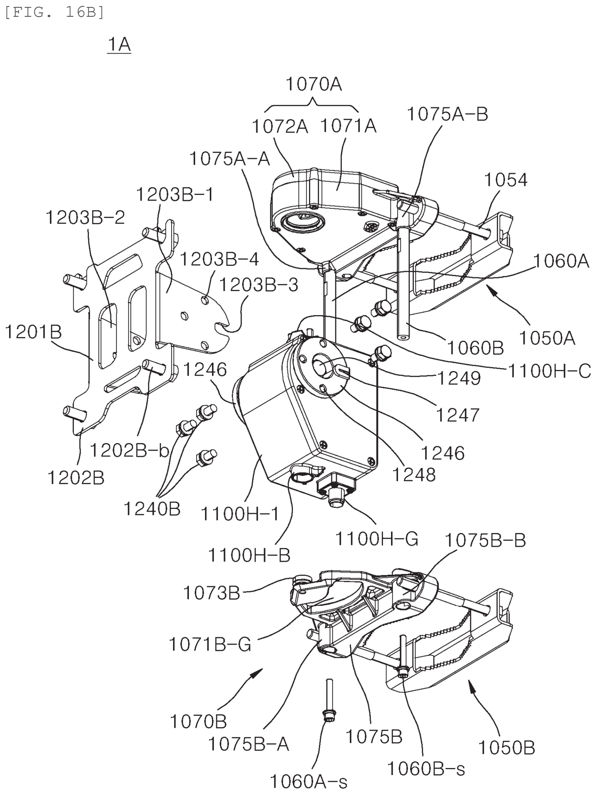

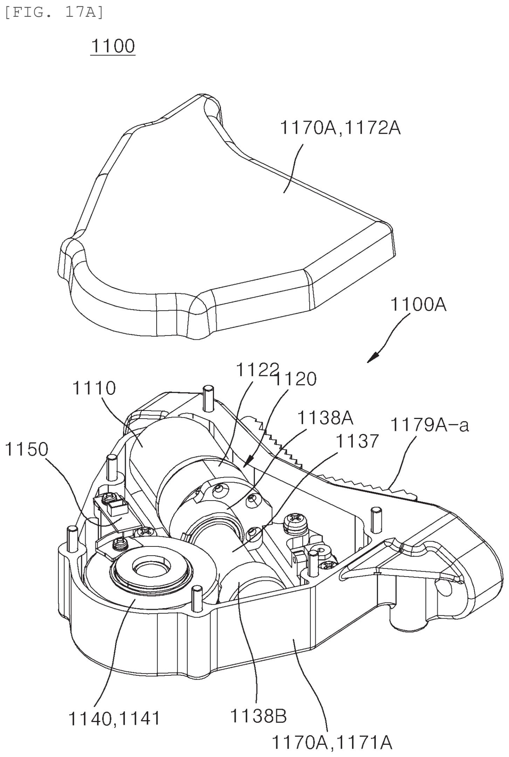

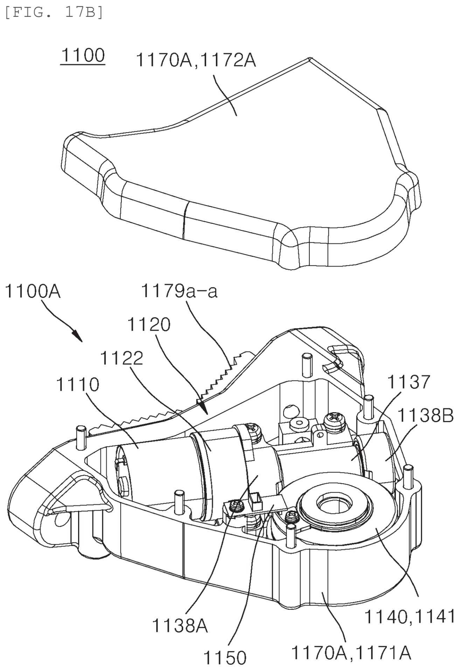

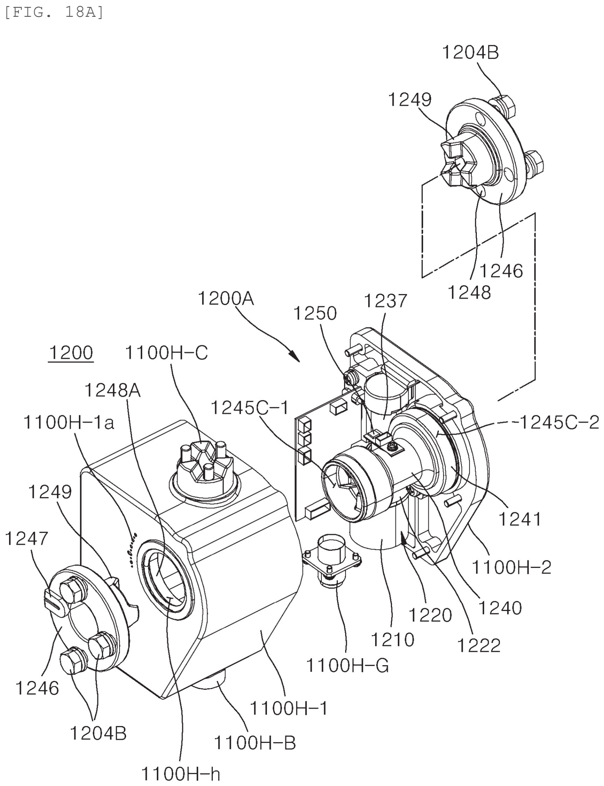

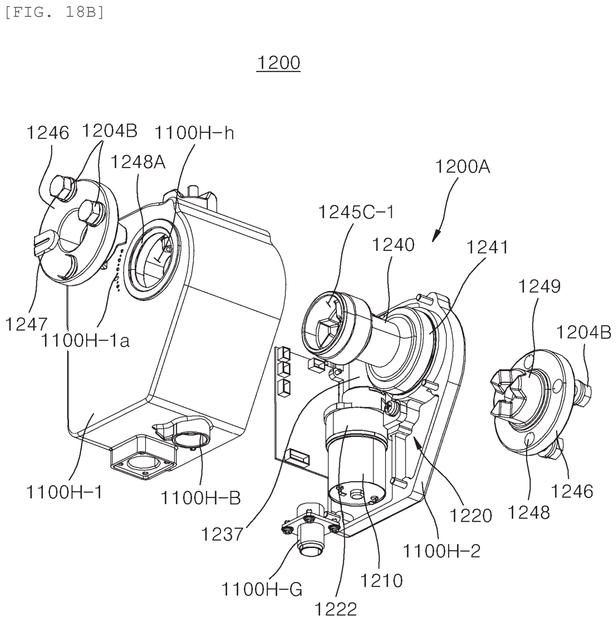

FIGS. 15A and 15B are downward and upward perspective views showing a clamping apparatus for an electronic device according to another embodiment of the present disclosure, FIGS. 16A and 16B are exploded perspective views of FIGS. 15A and 15B, FIGS. 17A and 17B are exploded perspective views in one direction and the other direction of a steering unit among components of the clamping apparatus for an electronic device according to another embodiment of the present disclosure, and FIGS. 18A and 18B are downward and upward exploded perspective views showing a tilting unit among components of the clamping apparatus for an electronic device according to another embodiment of the present disclosure.

Hereinafter, a clamping apparatus 1A for an electronic device according to another embodiment of the present disclosure and an antenna apparatus 1A (A-1) and a lighting apparatus 1A (A-2) each including the same are described with reference to the accompanying drawings.

However, detailed descriptions of components having the same configurations and functions as those in the clamping apparatus 1 for an electronic device according to an embodiment of the present disclosure and the antenna apparatus 1 (A-1) and the lighting apparatus 1 (A-2) each including the same described above are omitted in order to avoid redundancy, and newly added and modified components in the clamping apparatus 1A for an electronic device according to another embodiment of the present disclosure and the antenna apparatus 1A (A-1) and the lighting apparatus 1A (A-2) each including the same are described in detail.

First, referring to FIGS. 15A and 15B, an upper fixing bracket part 1050A and a lower fixing bracket part 1050B provided around the outer peripheral surface of the support pole P are different from those in the above-described one embodiment in that a pair of clamping gear panels 1057a and 1057b are not provided separately and are integrally formed in a form in which a part of a bracket body 1051 is cut off.

In addition, in the case of the clamping apparatus 1 for an electronic device according to an embodiment of the present disclosure and the antenna apparatus 1 (A-1) and the lighting apparatus 1 (A-2) each including the same, as shown in FIGS. 6A and 6B, the stud fixing bolts 54 are fastened to the pair of connection bars 52 by penetrating the connection bar fastening terminals 53 included in the form of bosses at both ends of the bracket body 51, and the pair of connection bars 52 extend from the connection bar fastening terminals 53 of the upper fixing bracket part 50A and the lower fixing bracket part 50B toward the guide housing 70A and the steering rotation guide bracket part 70B and are respectively inserted into the bolt fastening holes 75A-h formed at both ends of the upper support pole clamping terminal 75A and the bolt fastening holes 75B-h formed at both ends of the lower support pole clamping terminal 75B, through tip ends thereof.

On the other hand, in the clamping apparatus 1A for an electronic device according to another embodiment of the present disclosure and the antenna apparatus 1 (A-1) and the lighting apparatus 1 (A-2) each including the same, as shown in FIGS. 16A and 16B, there is a difference in that a pair of connection bar fastening terminals 1053 are simply provided in the form of a panel with through holes 1053h, and stud fixing bolts 1054 directly penetrate the through holes 1053h of the pair of connection bar fastening terminals 1053 from the rear without providing the pair of connection bars 52 and are fastened to bolt fastening holes 1075A-h formed at both ends of the upper support pole clamping terminal 1075A of the guide housing 1070A and bolt fastening holes 1075B-h formed at both ends of the lower support pole clamping terminal 1075B of the steering rotation guide bracket part 1070B.

Second, in the clamping apparatus 1A for an electronic device according to another embodiment of the present disclosure and the antenna apparatus 1A (A-1) and the lighting apparatus 1A (A-2) each including the same, as shown in FIGS. 16A and 16B, in the tilting bracket part 1200B, a pair of tilting mounting parts 1203B-1 and 1203B-2 may be integrally formed by being bent rearward from a device mounting part 1201B.

This is different from the clamping apparatus 1 for an electronic device according to an embodiment of the present disclosure and the antenna apparatus 1 (A-1) and the lighting apparatus 1 (A-2) each including the same, in that the tilting shaft protrusions 205B-1 and 205B-2 form-fitted into shaft form-fitting grooves 245C-1 and 245C-2 of the tilting shaft 240 are integrally formed on the mutually facing inner surfaces of the pair of tilting mounting parts 203B-1 and 203B-2 and one tilting mounting part 203B-2 of the pair of tilting mounting parts 203B-1 and 203B-2 is provided separately.

The clamping apparatus 1 for an electronic device according to an embodiment of the present disclosure and the antenna apparatus 1 (A-1) and the lighting apparatus 1 (A-2) each including the same are fixed by an operation in which the separately provided tilting mounting part 203B-2 is moved in the axial direction of the tilting shaft 240 so that the shaft form-fitting groove 245C-2 and the tilting shaft protrusion 205B-2 are form-fitted and then is fastened to the mounting fastening hole 203B-2h formed in the front end of the tilting mounting part 203B-2 through a mounting bolt hole 201B-2h formed in the device mounting part 201B by using a fixing bolt (not shown).

However, in the case of the clamping apparatus 1 for an electronic device according to an embodiment of the present disclosure and the antenna apparatus 1 (A-1) and the lighting apparatus 1 (A-2) each including the same, since the fixing force for fixing the tilting mounting part 203B-2 depends only on the fixing bolts disposed in a straight line in the up and down direction, there is a possibility of shaking (misalignment) or damage due to external force in the lateral direction (left and right direction).

Accordingly, the clamping apparatus 1A for an electronic device according to another embodiment of the present disclosure and the antenna apparatus 1A (A-1) and the lighting apparatus 1A (A-2) each including the same are newly designed so that both of the pair of tilting mounting parts 1203B-1 and 1203B-2 are formed integrally with the device mounting part 1201B, a tilting shaft connection part 1246 including configurations (see reference numeral '1249' in FIG. 18A) corresponding to the tilting shaft protrusions 205B-1 and 205B-2 of one embodiment of the present disclosure is provided in a panel form separately from the tilting mounting parts 1203B-1 and 1203B-2, and the pair of tilting mounting parts 1203B-1 and 1203B-2 are fixed to an outer surface of the tilting shaft connection part 1246 by using a plurality of fixing bolts 1204B.

The tilting shaft connection part 1246 configured as above can be firmly secured by shaft connection bolts (not shown) that are fastened through shaft connection holes (not shown) formed to penetrate the tilting shaft protrusions 1249 after the tilting shaft protrusions 1249 are form-fitted into shaft form-fitting grooves 1245C-1 and 1245C-2 provided at both ends of the tilting shaft 1240 by moving from the outside to the inside of the steering housing 1100H.

In this way, after the tilting shaft connection part 1246 is fixed to the left and right ends of the tilting shaft 1240, the tilting mounting parts 1203B-1 and 1203B-2 formed integrally with the device mounting part 1201B are moved to the rear where the steering housing 1100H is provided, are moved so that fixing bolt fastening holes 1248 formed in the tilting shaft connection part 1246 and fixing bolt through holes 1203B-4 formed in the tilting mounting parts 1203B-1 and 1203B-2 are mutually matched, and then are completely fixed using the plurality of fixing bolts 1204B, so that the connection work can be performed without interference with the steering housing 1100H.

The steering housing 1100H may include a housing body 1100H-1 and a housing cover 1100H-2 that shields one open side of the housing body 1100H-1, similar to the clamping apparatus 1 for an electronic device according to an embodiment of the present disclosure and the antenna apparatus 1 (A-1) and the lighting apparatus 1 (A-2) each including the same.

Here, a shaft through hole 1100H-h for communication may be formed between the closed side of the housing body 1100H-1 and the housing cover 1100H-2 to allow the tilting shaft protrusion 1249 of the aforementioned tilting shaft connection part 1246 to be inserted into the installation space 200S.

A rotation support bearing 1248A may be interposed on an inner peripheral surface of the shaft penetration hole 1100H-h to rotatably support the end of the tilting shaft 1240 to which the tilting shaft protrusion 1249 is form-fitted (coupled).

On the other hand, a tilting angle display part 1247 for displaying a tilting angle may be formed to protrude outward on the outer surface of the tilting shaft connection part 1246, and display part accommodating grooves 1203B-3 for accommodating the tilting angle display part 1247 may be formed by cutting off the rear ends of the pair of tilting mounting parts 1203B-1 and 1203B-2 to prevent interfere with the tilting angle display part 1247.

The steering housing 1100H may be provided with a tilting angle printing part 1100H-1a that allows a user to estimate a tilting angle along an indication line of the tilting angle display part 1247 described above.

Third, in the clamping apparatus 1A for an electronic device according to another embodiment of the present disclosure and the antenna apparatus 1A (A-1) and the lighting apparatus 1A (A-2) each including the same, as shown in FIGS. 17A and 17B, there is a difference in that the vertical height occupied by a steering drive part 1100A provided inside a guide housing 1170A is smaller than that of the clamping apparatus 1 for an electronic device according to an embodiment of the present disclosure described above.

More specifically, in the case of the clamping apparatus 1 for an electronic device according to an embodiment of the present disclosure and the antenna apparatus 1 (A-1) and the lighting apparatus 1 (A-2) each including the same, as shown in FIGS. 10A and 10B, the motor shaft 110C of the steering drive motor 110 is formed in the up and down direction, the steering drive motor 110 is longitudinally disposed in the up and down direction inside the guide housing 70A, and the motor installation groove 74A is inevitably formed to protrude upward so that a part of the upper end of the steering drive motor 110 is accommodated in the upper portion of the guide housing 70A.

On the other hand, in the case of the clamping apparatus 1A for an electronic device according to another embodiment of the present disclosure and the antenna apparatus 1A (A-1) and the lighting apparatus 1A (A-2) each including the same, the rotation shaft of a first worm gear (not shown, see a configuration corresponding to reference numeral '131' in FIGS. 10A and 10B) of a reduction gear set 1120 is horizontally disposed, and a motor shaft (not shown) of a steering drive motor 1110 connected thereto is horizontally disposed to be directly connected to the first worm gear, so that the steering drive motor 1110 is horizontally accommodated in the guide housing 1170A and accordingly, the vertical thickness of the guide housing 1170A can be prevented from increasing.

On the other hand, the clamping apparatus 1A for an electronic device according to another embodiment of the present disclosure and the antenna apparatus 1A (A-1) and the lighting apparatus 1A (A-2) each including the same may further include a steering photo sensor part 1150 that detects the rotation of a pinion gear part 1141 of a steering shaft 1140, as shown in FIGS. 17A and 17B.

The steering photo sensor part 1150 further includes a photo sensor (not shown), and detects the rotation angle of the pinion gear part 1141 by using the photo sensor, so that the left and right origins can be distinguished during the steering rotation of the electronic device A.

In addition, the clamping apparatus 1A for an electronic device according to another embodiment of the present disclosure and the antenna apparatus 1A (A-1) and lighting apparatus 1A (A-2) each including the same may further include a tilt photo sensor part 1250 that detects the rotation of a pinion gear part 1241 of a tilting shaft 1240, as shown in FIGS. 18A and 18B.

Similar to the steer photo sensor part 1150, the tilt photo sensor part 1250 detects the rotation angle of the pinion gear part 1241 of the tilting shaft 1240, thereby allowing the vertical origins to be distinguished during the tilting rotation of the electronic device A.

Since unexplained reference numeral 1200A in FIGS. 18A and 18B represents a component that performs the same function as the tilting drive part 200A among the components of the clamping apparatus 1 for an electronic device according to an embodiment of the present disclosure described above, detailed description thereof has been omitted in order to avoid redundancy.

The clamping apparatuses 1 and 1A for an electronic device according to embodiments of the present disclosure and the antenna apparatuses 1, A-1, and 1A, A-1 and the lighting apparatuses 1, A-2, and 1A, A-2 each including the same have been described in detail with reference to the accompanying drawings. However, embodiments of the present disclosure are not necessarily limited to the above-described embodiments, and it will be apparent that various modifications and equivalent implementations are possible by those skilled in the art. Therefore, the true scope of the present disclosure is defined by the claims set forth below.

### [Industrial Applicability]

The present disclosure provides a clamping apparatus for an electronic device that allows an electronic device to be tilted and rotated in an up and down direction while simultaneously allowing left-right steering rotation, thereby maximally ensuring a rotational range in each direction, and can be installed on a support pole through an operation of first mounting a part of a tilting bracket on a relatively heavy electronic device and then easily coupling the tilting bracket to a steering housing, thereby ensuring the safety of workers on site, and an antenna apparatus and a lighting apparatus each including the same.

## Claims

1. A clamping apparatus for an electronic device, the clamping apparatus comprising:
a guide housing configured to form and provide a predetermined installation space;
a steering unit including a steering housing provided to be capable of left-right steering rotation with respect to the guide housing; and
a tilting unit provided to be capable of back-and-forth tilting rotation with respect to the steering unit, including a tilting bracket part for installing an electronic device, and configured to internally form and provide a predetermined installation space,
wherein a steering drive part that drives the steering unit is disposed hidden in an installation space within the guide housing, and a tilting drive part that drives the tilting unit is disposed hidden in an installation space within the steering housing.

2. The clamping apparatus of claim 1, further comprising:
support pole installation bracket parts configured to mediate an installation of the electronic device to a support pole,
wherein the support pole installation bracket part comprises:
an upper fixing bracket part configured to mediate an installation of the guide housing to the support pole;
a steering rotation guide bracket part provided so that the steering housing is disposed between the guide housing and the steering rotation guide bracket part and configured to support the left-right steering rotation of the steering housing; and
a lower fixing bracket part configured to mediate an installation of the steering rotation guide bracket part to the support pole.

3. The clamping apparatus of claim 2, each of the upper fixing bracket part and the lower fixing bracket part comprises:
a bracket body that is tightly coupled to one side surface of the support pole; and
a pair of connection bars extending from both ends of the bracket body and extending with the support pole interposed therebetween,
wherein front ends of the pair of connection bars of the upper fixing bracket part are connected to the guide housing, and
front ends of the pair of connection bars of the lower fixing bracket part are connected to the steering rotation guide bracket part.

4. The clamping apparatus of claim 1, wherein the steering drive part comprises:
a steering shaft vertically disposed inside the guide housing in an up and down direction,
wherein one end of the steering shaft is coupled to be form-fitted to a shaft connection part integrally provided on an upper surface of the steering housing so as to rotatably interfere in a shaft rotation direction.

5. The clamping apparatus of claim 4, wherein the steering drive part is installed inside the guide housing and further comprises:
a steering drive motor having an electrically rotatably driven motor shaft; and
a reduction gear set connected to the motor shaft of the steering drive motor to receive rotational force and reduce the rotational force at a predetermined gear ratio.

6. The clamping apparatus of claim 5, wherein an output worm gear included in the reduction gear set and engaged with the steering shaft to transmit reduced rotational force is disposed horizontally in the guide housing, and
is disposed to be offset at a predetermined angle with respect to an axial direction of a tilting shaft of the tilting unit.

7. The clamping apparatus of claim 6, further comprising:
a steer photo sensor part included in the reduction gear set and configured to detect a rotation angle of a pinion gear part included in the steering shaft to be engaged with the output worm gear.

8. The clamping apparatus of claim 5, further comprising:
a first worm gear included in the reduction gear set and connected to the motor shaft of the steering drive motor,
wherein a rotation shaft of the first worm gear is horizontally disposed, and
the steering drive motor is disposed inside the guide housing so that the motor shaft is directly connected to the rotation shaft of the first worm gear and a longitudinal direction is horizontal.

9. The clamping apparatus of claim 2, wherein a shaft connection part form-fitted to a lower end of a steering shaft exposed to a lower surface of the guide housing to receive rotational force of the steering drive part is integrally provided on an upper surface of the steering housing, and
a steering rotation guide boss, into which a steering guide protrusion protruding upward from the steering rotation guide bracket part is inserted, is integrally provided on a lower surface of the steering housing.

10. The clamping apparatus of claim 2, wherein a power connector protrudes downward from a lower surface of the steering housing to electrically connect the steering housing to the tiling drive part, and
an interference avoidance hole is provided vertically through the steering rotation guide bracket part to prevent interference with the power connector.

11. The clamping apparatus of claim 1, wherein the tilting drive part comprises:
a tilting shaft horizontally disposed inside the steering housing in a left and right direction,
wherein the tilting shaft is formed at both left and right ends thereof with shaft form-fitting grooves to which tilting shaft protrusions of the tilting bracket part inserted through left and right sides of the steering housing are form-fitted.

12. The clamping apparatus of claim 11, wherein the tilting bracket part comprises:
a device mounting part having a front surface to which a back surface of the electronic device is coupled; and
a pair of tilting mounting parts that extend rearward from a back surface of the device mounting part to overlap left and right sides of the steering housing and with which the tilting shaft protrusions are integrally formed,
wherein at least one of the pair of tilting mounting parts is detachable from the device mounting part so that the tilting shaft protrusions are inserted in the left and right direction into the shaft form-fitting grooves of the tilting shaft fixed inside the steering housing.

13. The clamping apparatus of claim 11, wherein the tilting bracket part comprises:
a device mounting part having a front surface to which a back surface of the electronic device is coupled; and
a pair of tilting mounting parts that extend rearward from a back surface of the device mounting part to overlap left and right sides of the steering housing and that are formed integrally with the device mounting part,
wherein the pair of tilting mounting parts are fixed to a tilting shaft connection part including the tilting shaft protrusions inserted into the shaft form-fitting grooves of the tilting shaft.

14. The clamping apparatus of claim 11, wherein the tilting drive part is installed inside the steering housing and further comprises:
a tilting drive motor having an electrically rotatably driven motor shaft; and
a reduction gear set connected to a motor shaft of the tilting drive motor to receive rotational force and reduce the rotational force at a predetermined gear ratio.

15. The clamping apparatus of claim 11, wherein the reduction gear set further comprises:
an output worm gear engaged with a pinion gear part provided in the steering shaft to transmit the reduced rotational force; and
a tilt photo sensor part configured to detect a rotation angle of the pinion gear part provided in the steering shaft.

16. An antenna apparatus including a clamping apparatus for an electronic device, wherein the clamping apparatus for an electronic device comprises:
a guide housing configured to form and provide a predetermined installation space;
a steering unit including a steering housing provided to be capable of left-right steering rotation with respect to the guide housing so that a beam irradiation angle from an irradiation surface of an antenna element is adjusted in a left and right direction; and
a tilting unit provided to be capable of back-and-forth tilting rotation with respect to the steering unit so that the beam irradiation angle of the antenna element is adjusted in an up and down direction, including a tilting bracket part for installing an antenna housing body installed with the antenna element, and configured to internally form and provide a predetermined installation space,
wherein a steering drive part that drives the steering unit is disposed hidden in an installation space within the guide housing, and a tilting drive part that drives the tilting unit is disposed hidden in an installation space within the steering housing.

17. The antenna apparatus including a clamping apparatus for an electronic device of claim 16, wherein the clamping apparatus for an electronic device further comprises:
support pole installation bracket parts configured to mediate an installation of the antenna housing body to a support pole,
wherein the support pole installation bracket part comprises:
an upper fixing bracket part configured to mediate an installation of the guide housing to the support pole;
a steering rotation guide bracket part provided so that the steering housing is disposed between the guide housing and the steering rotation guide bracket part and configured to support the left-right steering rotation of the steering housing; and
a lower fixing bracket part configured to mediate an installation of the steering rotation guide bracket part to the support pole.

18. The antenna apparatus including a clamping apparatus for an electronic device of claim 17, wherein each of the upper fixing bracket part and the lower fixing bracket part comprises:
a bracket body that is tightly coupled to one side surface of the support pole; and
a pair of connection bars extending from both ends of the bracket body and extending with the support pole interposed therebetween,
wherein front ends of the pair of connection bars of the upper fixing bracket part are connected to the guide housing, and
front ends of the pair of connection bars of the lower fixing bracket part are connected to the steering rotation guide bracket part.

19. The antenna apparatus including a clamping apparatus for an electronic device of claim 16, wherein the steering drive part comprises:
a steering shaft vertically disposed inside the guide housing in an up and down direction,
wherein one end of the steering shaft is coupled to be form-fitted to a shaft connection part integrally provided on an upper surface of the steering housing so as to rotatably interfere in a shaft rotation direction.

20. The antenna apparatus including a clamping apparatus for an electronic device of claim 18, wherein the steering drive part is installed inside the guide housing and further comprises:
a steering drive motor having an electrically rotatably driven motor shaft; and
a reduction gear set connected to the motor shaft of the steering drive motor to receive rotational force and reduce the rotational force at a predetermined gear ratio.

21. The antenna apparatus including a clamping apparatus for an electronic device of claim 16, wherein the tilting drive part comprises:
a tilting shaft horizontally disposed inside the steering housing in a left and right direction,
wherein the tilting shaft is formed at both left and right ends thereof with shaft form-fitting grooves to which tilting shaft protrusions of the tilting bracket part inserted through left and right sides of the steering housing are form-fitted.

22. The antenna apparatus including a clamping apparatus for an electronic device of claim 21, wherein the tilting bracket part comprises:
a device mounting part having a front surface to which a back surface of the antenna housing body is coupled; and
a pair of tilting mounting parts that extend rearward from a back surface of the device mounting part to overlap left and right sides of the steering housing and with which the tilting shaft protrusions are integrally formed,
wherein at least one of the pair of tilting mounting parts is detachable from the device mounting part so that the tilting shaft protrusions are inserted in the left and right direction into the shaft form-fitting grooves of the tilting shaft fixed inside the steering housing.

23. The antenna apparatus including a clamping apparatus for an electronic device of claim 21, wherein the tilting bracket part comprises:
a device mounting part having a front surface to which a back surface of the antenna housing body is coupled; and
a pair of tilting mounting parts that extend rearward from a back surface of the device mounting part to overlap left and right sides of the steering housing and that are formed integrally with the device mounting part,
wherein the pair of tilting mounting parts are fixed to a tilting shaft connection part including the tilting shaft protrusions inserted into the shaft form-fitting grooves of the tilting shaft.

24. A lighting apparatus including a clamping apparatus for an electronic device, wherein the clamping apparatus for an electronic device comprises:
a guide housing configured to form and provide a predetermined installation space;
a steering unit including a steering housing provided to be capable of left-right steering rotation with respect to the guide housing so that a light irradiation angle from an irradiation surface of an LED element is adjusted in a left and right direction; and
a tilting unit provided to be capable of back-and-forth tilting rotation with respect to the steering unit so that the light irradiation angle of the LED element is adjusted in an up and down direction, including a tilting bracket part for installing a lighting body installed with the LED element, and configured to internally form and provide a predetermined installation space,
wherein a steering drive part that drives the steering unit is disposed hidden in an installation space within the guide housing, and a tilting drive part that drives the tilting unit is disposed hidden in an installation space within the steering housing.

25. The lighting apparatus including a clamping apparatus for an electronic device of claim 24, wherein the clamping apparatus for an electronic device further comprises:
support pole installation bracket parts configured to mediate an installation of the lighting body to a support pole,
wherein the support pole installation bracket part comprises:
an upper fixing bracket part configured to mediate an installation of the guide housing to the support pole;
a steering rotation guide bracket part provided so that the steering housing is disposed between the guide housing and the steering rotation guide bracket part and configured to support the left-right steering rotation of the steering housing; and
a lower fixing bracket part configured to mediate an installation of the steering rotation guide bracket part to the support pole.

26. The lighting apparatus including a clamping apparatus for an electronic device of claim 25, wherein each of the upper fixing bracket part and the lower fixing bracket part comprises:
a bracket body that is tightly coupled to one side surface of the support pole; and
a pair of connection bars extending from both ends of the bracket body and extending with the support pole interposed therebetween,
wherein front ends of the pair of connection bars of the upper fixing bracket part are connected to the guide housing, and
front ends of the pair of connection bars of the lower fixing bracket part are connected to the steering rotation guide bracket part.

27. The lighting apparatus including a clamping apparatus for an electronic device of claim 24, wherein the steering drive part comprises:
a steering shaft vertically disposed inside the guide housing in an up and down direction,
wherein one end of the steering shaft is coupled to be form-fitted to a shaft connection part integrally provided on an upper surface of the steering housing so as to rotatably interfere in a shaft rotation direction.

28. The lighting apparatus including a clamping apparatus for an electronic device of claim 26, wherein the steering drive part is installed inside the guide housing and further comprises:
a steering drive motor having an electrically rotatably driven motor shaft; and
a reduction gear set connected to the motor shaft of the steering drive motor to receive rotational force and reduce the rotational force at a predetermined gear ratio.

29. The lighting apparatus including a clamping apparatus for an electronic device of claim 24, wherein the tilting drive part comprises:
a tilting shaft horizontally disposed inside the steering housing in a left and right direction,
wherein the tilting shaft is formed at both left and right ends thereof with shaft form-fitting grooves to which tilting shaft protrusions of the tilting bracket part inserted through left and right sides of the steering housing are form-fitted.

30. The lighting apparatus including a clamping apparatus for an electronic device of claim 29, wherein the tilting bracket part comprises:
a device mounting part having a front surface to which a back surface of the lighting body is coupled; and
a pair of tilting mounting parts that extend rearward from a back surface of the device mounting part to overlap left and right sides of the steering housing and with which the tilting shaft protrusions are integrally formed,
wherein at least one of the pair of tilting mounting parts is detachable from the device mounting part so that the tilting shaft protrusions are inserted in the left and right direction into the shaft form-fitting grooves of the tilting shaft fixed inside the steering housing.

31. The lighting apparatus including a clamping apparatus for an electronic device of claim 29, wherein the tilting bracket part comprises:
a device mounting part having a front surface to which a back surface of the lighting body is coupled; and
a pair of tilting mounting parts that extend rearward from a back surface of the device mounting part to overlap left and right sides of the steering housing and that are formed integrally with the device mounting part,
wherein the pair of tilting mounting parts are fixed to a tilting shaft connection part including the tilting shaft protrusions inserted into the shaft form-fitting grooves of the tilting shaft.
